# EUROPEAN PATENT APPLICATION

(11) **EP 4 321 841 A1**
(43) Date of publication of application: **14.02.2024**
(21) Application number: 22794550.8
(22) Date of filing: 07.04.2022
(51) Int. Cl.: G01C 21/34, G01C 21/28

(54) **MAP, MAP GENERATION METHOD AND APPARATUS, AND MAP USAGE METHOD AND APPARATUS**

(30) Priority: 25.04.2021 CN 202110448544
(71) Applicant: Huawei Technologies Co., Ltd., Longgang Shenzhen, Guangdong 518129 (CN)
(72) Inventor: WANG, Xingbing, Shenzhen, Guangdong 518129 (CN); LIU, Jianqin, Shenzhen, Guangdong 518129 (CN)
(74) Representative: Körber, Martin Hans
(86) International application number: PCT/CN2022/085664
(87) International publication number: WO 2022/228079

(57) **Abstract**

A map, a map generation method and apparatus, and a map using method and apparatus (30, 31, 40, 41) are provided. The map generation method includes: obtaining a plurality of pieces of positioning data of a group of location points, a plurality of pieces of positioning quality reference information, and location information of a map element in a map (S101); determining a target geographic range and a plurality of location points in the target geographic range based on the plurality of pieces of positioning data, the plurality of pieces of positioning quality reference information, and the location information of the map element, where the plurality of location points in the target geographic range are some or all of location points in the group of location points; generating positioning quality indication information based on positioning quality reference information of the plurality of location points in the target geographic range, to indicate a statistical value of positioning quality in the target geographic range (S102); and adding the positioning quality indication information to the map (S103). In this way, a map with more positioning reference is provided, so that a vehicle or the like can selectively use positioning information in a high definition map.

## Description

This application claims priority to Chinese Patent Application No. 202110448544.4, filed with the China National Intellectual Property Administration on April 25, 2021 and entitled "MAP, MAP GENERATION METHOD AND APPARATUS, AND MAP USING METHOD AND APPARATUS", which is incorporated herein by reference in its entirety.

### TECHNICAL FIELD

This application relates to the field of autonomous driving technologies, and in particular, to a map, a map generation method and apparatus, and a map using method and apparatus.

### BACKGROUND

A high definition map (High Definition Map, HD Map) is also referred to as a highdefinition map or a high-precision map, and is usually used as an auxiliary map for autonomous driving. The high definition map includes static information and dynamic information, and is capable of loading map information through cloud collaboration, vehicle-road collaboration, and the like to assist vehicle sensing, positioning, planning, and control.

Generation of the high definition map depends on positioning data of a location point. Because collection of the positioning data is likely to be affected by a surrounding environment, quality of positioning data obtained on different map elements (for example, a road and a lane) in the high definition map is different. If low-quality positioning data in a high definition map is used in an autonomous driving process, inaccurate positioning is likely to cause a deviation of a navigation route, and even affects driving safety of a vehicle.

### SUMMARY

Embodiments of this application disclose a map, a map generation method and apparatus, and a map using method and apparatus, so that a vehicle or a portable terminal that uses the map can selectively use positioning information in the high definition map, thereby improving safety of autonomous driving.

According to a first aspect, an embodiment of this application provides a map generation method. The method includes: obtaining positioning location information of a first group of a plurality of location points, positioning quality reference information of the first group of the plurality of location points, and location information of a map element in a map; generating positioning quality indication information based on the positioning location information of the first group of the plurality of location points, the positioning quality reference information of the first group of the plurality of location points, and the location information of the map element in the map, where the positioning quality indication information indicates positioning quality in a target geographic range, the first group of the plurality of location points include a second group of a plurality of location points in the target geographic range, and the positioning quality in the target geographic range is a statistical value obtained based on positioning quality reference information of the second group of the plurality of location points; and adding the positioning quality indication information to the map.

Quality of collected positioning data is likely to be affected by a surrounding environment, for example, a signal is poor due to blocking of a tree or a high building. As a result, a deviation of the collected positioning data is large and positioning accuracy is low. The positioning quality indication information generated by using the foregoing method may indicate positioning quality in a target geographic range, and the positioning quality in the target range is a statistical value. Therefore, the positioning quality indication information provides relatively accurate prior information of positioning quality. The positioning quality indication information is added to the map, so that positioning quality of the map element in the map can be intuitively and clearly displayed on the map.

In addition, because road segmentation and lane segmentation in the map are random, that is, lengths of roads and lanes in the map are different, considering impact such as a sampling frequency of location points and a vehicle speed of a data collection vehicle, a quantity of location points collected on some roads or lanes is extremely small, and it is meaningless to estimate positioning quality of the roads or lanes in the map based on the few location points. In the method, the positioning quality is collected in the target geographic range. A segmentation manner of the target geographic range may be different from a segmentation manner of a road and a lane in the map. The target geographic range is established in the positioning quality indication information, and positioning quality of the target geographic range is calculated through statistics based on positioning quality reference information of location points in the target geographic range. The positioning quality of the target geographic range that is obtained in this manner has relatively high reliability and reference value.

In an embodiment of the first aspect, the target geographic range is a region, a road, or a lane in the positioning quality indication information.

The region, the road, or the lane in the positioning quality indication information may be an existing region, road, or lane in the map, or may be a region, a road, or a lane that is regenerated according to different segmentation rules. The target geographic range provides a proper range for positioning quality estimation.

In an embodiment of the first aspect, the map element includes at least one of a region, a road, a lane, an intersection, a toll station, a ramp, a tunnel, and a bridge in the map.

It may be understood that the region and the intersection are area-type map elements, and may represent corresponding location information by using a plurality of corner point coordinates on the map. The road, the lane, the ramp, the tunnel, and the bridge are line-type map elements, and may represent corresponding location information by using two endpoints (for example, coordinates of a start point and coordinates of an end point) on the map. The toll station, the gas station, and the like are point-type map elements, and a location of the point-type map element may be represented by using one point coordinates on the map.

In an embodiment of the first aspect, the target geographic range is a road in the positioning quality indication information, and the road in the positioning quality indication information includes a plurality of roads in the map, or the road in the map includes a plurality of roads in the positioning quality indication information; or the target geographic range is a lane in the positioning quality indication information, and the lane in the positioning quality indication information includes a plurality of lanes in the map, or the lane in the map includes a plurality of lanes in the positioning quality indication information.

In the foregoing implementation, the road in the positioning quality indication information may include a plurality of roads in the map, or the lane in the positioning quality indication information may include a plurality of lanes in the map. In this way, a quantity of location points corresponding to the road (or the lane) in the positioning quality indication information is greater than a quantity of location points corresponding to the road (or the lane) in the map, so that accuracy and reference value of a statistical value of positioning quality in a corresponding target geographic range can be improved.

In another specific implementation, that the road in the map includes a plurality of roads in the positioning quality indication information may be understood as the following: A road in the map corresponds to a plurality of roads in the positioning quality indication information, or a road in the map is segmented into different roads in the positioning quality indication information. For example, if a road 1 in the map is segmented into a road a1 and a road a2 in the positioning quality indication information, it may be understood that both the road a1 and the road a2 include the road 1, or it may be understood that a part of the road 1 belongs to the road a1, and the other part of the road 1 belongs to the road a2. In this way, flexibility of generating the road in the positioning quality indication information can be improved. Similarly, the lane in the map includes a plurality of lanes in the positioning quality indication information, so that flexibility of generating the lane in the positioning quality indication information is improved.

In an embodiment of the first aspect, the target geographic range is a road in the positioning quality indication information, and the road in the positioning quality indication information has a fixed length; or the target geographic range is a lane in the positioning quality indication information, and the lane in the positioning quality indication information has a fixed length.

In the foregoing implementation, the road in the positioning quality indication information or the lane in the positioning quality indication information is of a fixed length, so that roads or lanes generated in the positioning quality indication information are relatively even, and quantities of location points corresponding to the roads (or the lanes) in the positioning quality indication information are also approximate. This helps improve accuracy of estimated positioning quality in the target geographic range in the positioning quality indication information, and increases reliability of the positioning quality indication information.

In an embodiment of the first aspect, the target geographic range is a road in the positioning quality indication information, and an endpoint of the road in the positioning quality indication information is the map element, an endpoint of the map element, or a corner point of the map element; or the target geographic range is a lane in the positioning quality indication information, and an endpoint of the lane in the positioning quality indication information is the map element, an endpoint of the map element, or a corner point of the map element.

For example, the target geographic range is a road in the positioning quality indication information. When the map element is a gas station or a toll station, an endpoint of the road in the positioning quality indication information is the map element. When the map element is a road, a lane, a ramp, a tunnel, a bridge, or the like, an endpoint of the road in the positioning quality indication information is an endpoint of the map element. When the map element is a region, an intersection, or the like, an endpoint of the road in the positioning quality indication information is a corner point of the map element. When the target geographic range is a lane in the positioning quality indication information, for descriptions of the endpoint of the lane in the positioning quality indication information, refer to related descriptions of the endpoint of the road in the positioning quality indication information. Details are not described herein again. In the foregoing implementation, flexibility of a manner of generating a road or a lane in the positioning quality indication information is improved.

In an embodiment of the first aspect, the target geographic range is a road in the positioning quality indication information, and a midpoint of the road in the positioning quality indication information is a location point with worst positioning quality in the second group of the plurality of location points; or the target geographic range is a lane in the positioning quality indication information, and a midpoint of the lane in the positioning quality indication information is a location point with worst positioning quality in second group of the plurality of location points.

In the foregoing implementation, the road or the lane in the positioning quality indication information is adaptively generated by using the location point with lowest quality as a center, so that a road or a lane with poor positioning quality in the positioning quality indication information is quickly determined, and a relatively good warning function can be provided for a user of the positioning quality indication information.

In an embodiment of the first aspect, a process of generating the positioning quality indication information may specifically include: determining the target geographic range and the second group of the plurality of location points based on the positioning location information of the first group of the plurality of location points and the location information of the map element in the map; obtaining the statistical value based on the positioning quality reference information of the second group of the plurality of location points; and generating the positioning quality indication information based on the target geographic range and the statistical value.

In the foregoing implementation, the positioning quality in the target geographic range in the positioning quality indication information is a statistical value, and indicates an average positioning level in the target geographic range. Therefore, the generated positioning quality indication information has relatively high reliability and reference value, and can better provide reliable prior information of positioning quality for a user of the positioning quality indication information.

In an embodiment of the first aspect, the positioning quality indication information further indicates a correspondence between the target geographic range and a road, a lane, or a region in the map.

In the foregoing implementation, the mapping relationship between the target geographic range in the positioning quality indication information and the road, the lane, or the region in the map is established. In this case, the positioning quality of the target geographic range in the positioning quality indication information may be used to reflect positioning quality of the road, the lane, or the region in the map, and provide reliable prior information of positioning quality for the region, the road, or the lane in the map.

In an embodiment of the first aspect, the positioning quality indication information includes time information, and the time information indicates a valid time of positioning quality in the target geographic range.

It can be learned that the time information is introduced into the positioning quality indication information, and impact of a surrounding environment (for example, vegetation varies with a season or a climate) on positioning quality is fully considered. A valid time of positioning quality in a target geographic range at a positioning layer is limited based on the time information, so that reliability and reference value of the positioning quality indication information is improved.

In an embodiment of the first aspect, the positioning quality reference information includes positioning precision of the location point, a precision factor DOP value of the location point, a quantity of satellites observed at the location point, or information indicating whether positioning location information of the location point is a fixed solution.

The positioning precision of the location point may be obtained based on an error (or referred to as an offset) of the location point relative to truth values in three directions: east, north, and vertical. The precision factor DOP value of the location point is used to measure an error amount caused by a geometric location of a satellite relative to an observer (for example, a data collection vehicle that collects the location point). The fixed solution means that an ambiguity corresponding to a case in which the positioning location information of the location point is obtained through calculation based on a carrier phase is an integer, and positioning quality corresponding to the fixed solution is better than positioning quality corresponding to a non-fixed solution.

According to a second aspect, an embodiment of this application provides a map using method. The method includes: receiving map information, where the map information includes positioning quality indication information and map topology information, the positioning quality indication information indicates a statistical value of positioning quality in a target geographic range, the map topology information indicates a location of a map element in a map, the map element includes at least one of a region, a road, a lane, an intersection, a toll station, a ramp, a tunnel, and a bridge in the map, and the target geographic range is a region, a road, or a lane in the positioning quality indication information; and performing path planning, driving decision making, or vehicle control based on the positioning quality indication information and the map topology information.

The region, the road, or the lane in the positioning quality indication information may be an existing region, road, or lane in the map, or may be a region, a road, or a lane that is regenerated according to different segmentation rules. The target geographic range provides a proper range for positioning quality estimation.

According to the foregoing method, a vehicle-side apparatus receives map information including the positioning quality indication information and the map topology information, and may perform path planning, driving decision making, or vehicle control based on the map information, so that the vehicle can independently choose to avoid a region, a road, or a lane with relatively poor positioning quality, or selectively set a relatively low confidence level for positioning information with relatively poor positioning quality. This improves a travel safety rate of the vehicle.

In an embodiment of the second aspect, the target geographic range is a road in the positioning quality indication information, and the road in the positioning quality indication information includes a plurality of roads in the map, or the road in the map includes a plurality of roads in the positioning quality indication information; or the target geographic range is a lane in the positioning quality indication information, and the lane in the positioning quality indication information includes a plurality of lanes in the map, or the lane in the map includes a plurality of lanes in the positioning quality indication information.

In an embodiment of the second aspect, the target geographic range is a road in the positioning quality indication information, and the road in the positioning quality indication information has a fixed length; or the target geographic range is a lane in the positioning quality indication information, and the lane in the positioning quality indication information has a fixed length.

In an embodiment of the second aspect, the target geographic range is a road in the positioning quality indication information, and an endpoint of the road in the positioning quality indication information is the map element, an endpoint of the map element, or a corner point of the map element; or the target geographic range is a lane in the positioning quality indication information, and an endpoint of the lane in the positioning quality indication information is the map element, an endpoint of the map element, or a corner point of the map element.

In an embodiment of the second aspect, the target geographic range is a road in the positioning quality indication information, the road in the positioning quality indication information includes a third group of a plurality of location points, and a midpoint of the road in the positioning quality indication information is a location point with worst positioning quality in the third group of the plurality of location points; or the target geographic range is a lane in the positioning quality indication information, the lane in the positioning quality indication information includes a fourth group of a plurality of location points, and a midpoint of the lane in the positioning quality indication information is a location point with worst positioning quality in the fourth group of the plurality of location points.

In an embodiment of the second aspect, the positioning quality indication information further indicates a correspondence between the target geographic range and a road in the map, or indicates a correspondence between the target geographic range and a lane in the map, or indicates a correspondence between the target geographic range and a region in the map.

In an embodiment of the second aspect, the positioning quality indication information includes time information, and the time information indicates a valid time of positioning quality in the target geographic range.

In an embodiment of the second aspect, the positioning quality indication information includes average positioning precision of a plurality of location points, an average precision factor DOP value of the plurality of location points, an average quantity of satellites observed at the plurality of location points, or a statistics status indicating whether positioning locations of the plurality of location points are fixed solutions.

It should be noted that for beneficial effects of the embodiments of the second aspect, refer to descriptions of beneficial effects of the corresponding embodiments of the first aspect. Details are not described herein again.

According to a third aspect, an embodiment of this application provides a map generation apparatus. The apparatus includes: an obtaining unit, configured to obtain positioning location information of a first group of a plurality of location points, positioning quality reference information of the first group of the plurality of location points, and location information of a map element in a map; a generation unit, configured to generate positioning quality indication information based on the positioning location information of the first group of the plurality of location points, the positioning quality reference information of the first group of the plurality of location points, and the location information of the map element in the map, where the positioning quality indication information indicates positioning quality in a target geographic range, the first group of the plurality of location points include a second group of a plurality of location points in the target geographic range, and the positioning quality in the target geographic range is a statistical value obtained based on positioning quality reference information of the second group of the plurality of location points; and a processing unit, configured to add the positioning quality indication information to the map. Usually, a map is generated by a server. In this case, the map generation apparatus may be a map server, or may be a component or a chip in the map server. In addition, the map may alternatively be generated by a roadside device, a vehicle, or a mobile terminal. In this case, the map generation apparatus may be the roadside device, the vehicle, or the mobile terminal, or a component or a chip of the roadside device, the vehicle, or the mobile terminal.

In an embodiment of the third aspect, the target geographic range is a region, a road, or a lane in the positioning quality indication information.

In an embodiment of the third aspect, the map element includes at least one of a region, a road, a lane, an intersection, a toll station, a ramp, a tunnel, and a bridge in the map.

In an embodiment of the third aspect, the target geographic range is a road in the positioning quality indication information, and the road in the positioning quality indication information includes a plurality of roads in the map, or the road in the map includes a plurality of roads in the positioning quality indication information; or the target geographic range is a lane in the positioning quality indication information, and the lane in the positioning quality indication information includes a plurality of lanes in the map, or the lane in the map includes a plurality of lanes in the positioning quality indication information.

In an embodiment of the third aspect, the target geographic range is a road in the positioning quality indication information, and the road in the positioning quality indication information has a fixed length; or the target geographic range is a lane in the positioning quality indication information, and the lane in the positioning quality indication information has a fixed length.

In an embodiment of the third aspect, the target geographic range is a road in the positioning quality indication information, and an endpoint of the road in the positioning quality indication information is the map element, an endpoint of the map element, or a corner point of the map element; or the target geographic range is a lane in the positioning quality indication information, and an endpoint of the lane in the positioning quality indication information is the map element, an endpoint of the map element, or a corner point of the map element.

In an embodiment of the third aspect, the target geographic range is a road in the positioning quality indication information, and a midpoint of the road in the positioning quality indication information is a location point with worst positioning quality in the second group of the plurality of location points; or the target geographic range is a lane in the positioning quality indication information, and a midpoint of the lane in the positioning quality indication information is a location point with worst positioning quality in second group of the plurality of location points.

In an embodiment of the third aspect, the generation unit is specifically configured to: determine the target geographic range and the second group of the plurality of location points based on the positioning location information of the first group of the plurality of location points and the location information of the map element in the map; obtain the statistical value based on the positioning quality reference information of the second group of the plurality of location points; and generate the positioning quality indication information based on the target geographic range and the statistical value.

In an embodiment of the third aspect, the positioning quality indication information further indicates a correspondence between the target geographic range and a road, a lane, or a region in the map.

In an embodiment of the third aspect, the positioning quality indication information includes time information, and the time information indicates a valid time of positioning quality in the target geographic range.

In an embodiment of the third aspect, the positioning quality reference information includes positioning precision of the location point, a precision factor DOP value of the location point, a quantity of satellites observed at the location point, or information indicating whether positioning location information of the location point is a fixed solution.

According to a fourth aspect, an embodiment of this application provides a map using apparatus. The apparatus includes: a receiving unit, configured to receive map information, where the map information includes positioning quality indication information and map topology information, the positioning quality indication information indicates a statistical value of positioning quality in a target geographic range, the map topology information indicates a location of a map element in a map, the map element includes at least one of a region, a road, a lane, an intersection, a toll station, a ramp, a tunnel, and a bridge in the map, and the target geographic range is a region, a road, or a lane in the positioning quality indication information; and a decision making unit, configured to perform path planning, driving decision making, or vehicle control based on the positioning quality indication information and the map topology information. The map using apparatus may be a vehicle, or may be a component (for example, a navigation apparatus or an autonomous driving apparatus in the vehicle) that can be used in the vehicle, or may be a chip that can be used in the vehicle.

In an embodiment of the fourth aspect, the target geographic range is a road in the positioning quality indication information, and the road in the positioning quality indication information includes a plurality of roads in the map, or the road in the map includes a plurality of roads in the positioning quality indication information; or the target geographic range is a lane in the positioning quality indication information, and the lane in the positioning quality indication information includes a plurality of lanes in the map, or the lane in the map includes a plurality of lanes in the positioning quality indication information.

In an embodiment of the fourth aspect, the target geographic range is a road in the positioning quality indication information, and the road in the positioning quality indication information has a fixed length; or the target geographic range is a lane in the positioning quality indication information, and the lane in the positioning quality indication information has a fixed length.

In an embodiment of the fourth aspect, the target geographic range is a road in the positioning quality indication information, and an endpoint of the road in the positioning quality indication information is the map element, an endpoint of the map element, or a corner point of the map element; or the target geographic range is a lane in the positioning quality indication information, and an endpoint of the lane in the positioning quality indication information is the map element, an endpoint of the map element, or a corner point of the map element.

In an embodiment of the fourth aspect, the target geographic range is a road in the positioning quality indication information, the road in the positioning quality indication information includes a third group of a plurality of location points, and a midpoint of the road in the positioning quality indication information is a location point with worst positioning quality in the third group of the plurality of location points; or the target geographic range is a lane in the positioning quality indication information, the lane in the positioning quality indication information includes a fourth group of a plurality of location points, and a midpoint of the lane in the positioning quality indication information is a location point with worst positioning quality in the fourth group of the plurality of location points.

In an embodiment of the fourth aspect, the positioning quality indication information further indicates a correspondence between the target geographic range and a road in the map, or indicates a correspondence between the target geographic range and a lane in the map, or indicates a correspondence between the target geographic range and a region in the map.

In an embodiment of the fourth aspect, the positioning quality indication information includes time information, and the time information indicates a valid time of positioning quality in the target geographic range.

In an embodiment of the fourth aspect, the positioning quality indication information includes average positioning precision of a plurality of location points, an average precision factor DOP value of the plurality of location points, an average quantity of satellites observed at the plurality of location points, or a statistics status indicating whether positioning locations of the plurality of location points are fixed solutions.

According to a fifth aspect, an embodiment of this application provides a map, where the map includes positioning quality indication information and map topology information, the positioning quality indication information indicates a statistical value of positioning quality in a target geographic range, and the map topology information indicates a location of a map element in the map.

It can be learned that the map provides positioning quality that is in a target geographic range and that has reference value and high reliability. The map integrates the positioning quality indication information and the map topology information, and can provide more accurate prior information of the positioning quality of the target geographic range for a user of the map.

In an embodiment of the fifth aspect, the map element includes at least one of a region, a road, a lane, an intersection, a toll station, a ramp, a tunnel, and a bridge in the map.

In an embodiment of the fifth aspect, the target geographic range is a region, a road, or a lane in the positioning quality indication information. The region, the road, or the lane in the positioning quality indication information may be an existing region, road, or lane in the map, or may be a region, a road, or a lane that is regenerated according to different segmentation rules. The target geographic range provides a proper range for positioning quality estimation.

In an embodiment of the fifth aspect, the target geographic range is a road in the positioning quality indication information, and the road in the positioning quality indication information includes a plurality of roads in the map, or the road in the map includes a plurality of roads in the positioning quality indication information; or the target geographic range is a lane in the positioning quality indication information, and the lane in the positioning quality indication information includes a plurality of lanes in the map, or the lane in the map includes a plurality of lanes in the positioning quality indication information.

In an embodiment of the fifth aspect, the target geographic range is a road in the positioning quality indication information, and the road in the positioning quality indication information has a fixed length; or the target geographic range is a lane in the positioning quality indication information, and the lane in the positioning quality indication information has a fixed length.

In an embodiment of the fifth aspect, the target geographic range is a road in the positioning quality indication information, and an endpoint of the road in the positioning quality indication information is the map element, an endpoint of the map element, or a corner point of the map element; or the target geographic range is a lane in the positioning quality indication information, and an endpoint of the lane in the positioning quality indication information is the map element, an endpoint of the map element, or a corner point of the map element.

In an embodiment of the fifth aspect, the target geographic range is a road in the positioning quality indication information, the road in the positioning quality indication information includes a third group of a plurality of location points, and a midpoint of the road in the positioning quality indication information is a location point with worst positioning quality in the third group of the plurality of location points; or the target geographic range is a lane in the positioning quality indication information, the lane in the positioning quality indication information includes a fourth group of a plurality of location points, and a midpoint of the lane in the positioning quality indication information is a location point with worst positioning quality in the fourth group of the plurality of location points.

In an embodiment of the fifth aspect, the positioning quality indication information further indicates a correspondence between the target geographic range and a road in the map, or indicates a correspondence between the target geographic range and a lane in the map, or indicates a correspondence between the target geographic range and a region in the map.

In an embodiment of the fifth aspect, the positioning quality indication information includes time information, and the time information indicates a valid time of positioning quality in the target geographic range.

According to a sixth aspect, an embodiment of this application provides a computer-readable storage medium. The computer-readable storage medium stores the map according to any one of the fifth aspect or the embodiments of the fifth aspect. The map includes positioning quality indication information and map topology information, the positioning quality indication information indicates a statistical value of positioning quality in a target geographic range, and the map topology information indicates a location of a map element in the map.

In an embodiment of the sixth aspect, the target geographic range is a region, a road, or a lane in the positioning quality indication information. The region, the road, or the lane in the positioning quality indication information may be an existing region, road, or lane in the map, or may be a region, a road, or a lane that is regenerated according to different segmentation rules. The target geographic range provides a proper range for positioning quality estimation.

In an embodiment of the sixth aspect, the map element includes at least one of a region, a road, a lane, an intersection, a toll station, a ramp, a tunnel, and a bridge in the map.

In an embodiment of the sixth aspect, the target geographic range is a road in the positioning quality indication information, and the road in the positioning quality indication information includes a plurality of roads in the map, or the road in the map includes a plurality of roads in the positioning quality indication information; or the target geographic range is a lane in the positioning quality indication information, and the lane in the positioning quality indication information includes a plurality of lanes in the map, or the lane in the map includes a plurality of lanes in the positioning quality indication information.

In an embodiment of the sixth aspect, the target geographic range is a road in the positioning quality indication information, and the road in the positioning quality indication information has a fixed length; or the target geographic range is a lane in the positioning quality indication information, and the lane in the positioning quality indication information has a fixed length.

In an embodiment of the sixth aspect, the target geographic range is a road in the positioning quality indication information, and an endpoint of the road in the positioning quality indication information is the map element, an endpoint of the map element, or a corner point of the map element; or the target geographic range is a lane in the positioning quality indication information, and an endpoint of the lane in the positioning quality indication information is the map element, an endpoint of the map element, or a corner point of the map element.

In an embodiment of the sixth aspect, the target geographic range is a road in the positioning quality indication information, the road in the positioning quality indication information includes a third group of a plurality of location points, and a midpoint of the road in the positioning quality indication information is a location point with worst positioning quality in the third group of the plurality of location points; or the target geographic range is a lane in the positioning quality indication information, the lane in the positioning quality indication information includes a fourth group of a plurality of location points, and a midpoint of the lane in the positioning quality indication information is a location point with worst positioning quality in the fourth group of the plurality of location points.

In an embodiment of the sixth aspect, the positioning quality indication information further indicates a correspondence between the target geographic range and a road in the map, or indicates a correspondence between the target geographic range and a lane in the map, or indicates a correspondence between the target geographic range and a region in the map.

In an embodiment of the sixth aspect, the positioning quality indication information includes time information, and the time information indicates a valid time of positioning quality in the target geographic range.

In an embodiment of the sixth aspect, the statistical value of positioning quality includes average positioning precision of a plurality of location points, an average precision factor DOP value of the plurality of location points, an average quantity of satellites observed at the plurality of location points, or a statistics status indicating whether positioning locations of the plurality of location points are fixed solutions.

According to a seventh aspect, an embodiment of this application provides a computer program product. The computer program product includes map information, the map information includes positioning quality indication information and map topology information, the positioning quality indication information indicates a statistical value of positioning quality in a target geographic range, and the map topology information indicates a location of a map element in a map.

In an embodiment of the seventh aspect, the target geographic range is a region, a road, or a lane in the positioning quality indication information. The region, the road, or the lane in the positioning quality indication information may be an existing region, road, or lane in the map, or may be a region, a road, or a lane that is regenerated according to different segmentation rules. The target geographic range provides a proper range for positioning quality estimation.

In an embodiment of the seventh aspect, the map element includes at least one of a region, a road, a lane, an intersection, a toll station, a ramp, a tunnel, and a bridge in the map.

In an embodiment of the seventh aspect, the target geographic range is a road in the positioning quality indication information, and the road in the positioning quality indication information includes a plurality of roads in the map, or the road in the map includes a plurality of roads in the positioning quality indication information; or the target geographic range is a lane in the positioning quality indication information, and the lane in the positioning quality indication information includes a plurality of lanes in the map, or the lane in the map includes a plurality of lanes in the positioning quality indication information.

In an embodiment of the seventh aspect, the target geographic range is a road in the positioning quality indication information, and the road in the positioning quality indication information has a fixed length; or the target geographic range is a lane in the positioning quality indication information, and the lane in the positioning quality indication information has a fixed length.

In an embodiment of the seventh aspect, the target geographic range is a road in the positioning quality indication information, and an endpoint of the road in the positioning quality indication information is the map element, an endpoint of the map element, or a corner point of the map element; or the target geographic range is a lane in the positioning quality indication information, and an endpoint of the lane in the positioning quality indication information is the map element, an endpoint of the map element, or a corner point of the map element.

In an embodiment of the seventh aspect, the target geographic range is a road in the positioning quality indication information, the road in the positioning quality indication information includes a third group of a plurality of location points, and a midpoint of the road in the positioning quality indication information is a location point with worst positioning quality in the third group of the plurality of location points; or the target geographic range is a lane in the positioning quality indication information, the lane in the positioning quality indication information includes a fourth group of a plurality of location points, and a midpoint of the lane in the positioning quality indication information is a location point with worst positioning quality in the fourth group of the plurality of location points.

In an embodiment of the seventh aspect, the positioning quality indication information further indicates a correspondence between the target geographic range and a road in the map, or indicates a correspondence between the target geographic range and a lane in the map, or indicates a correspondence between the target geographic range and a region in the map.

In an embodiment of the seventh aspect, the positioning quality indication information includes time information, and the time information indicates a valid time of positioning quality in the target geographic range.

In an embodiment of the seventh aspect, the statistical value of positioning quality is obtained based on positioning quality reference information of a plurality of location points in the target geographic range, and includes average positioning precision of the plurality of location points, an average precision factor DOP value of the plurality of location points, an average quantity of satellites observed at the plurality of location points, or a statistics status indicating whether positioning locations of the plurality of location points are fixed solutions.

According to an eighth aspect, an embodiment of this application provides a map using method. The method includes: receiving a map, where the map includes positioning quality indication information and map topology information, the positioning quality indication information indicates a statistical value of positioning quality in a target geographic range, and the map topology information indicates a location of a map element in the map; and storing the map, or displaying the map on a display apparatus.

In the foregoing method, the received map is stored so that the map can be quickly invoked at any time subsequently, and the map is displayed on the display apparatus, so that a user can intuitively and clearly learn positioning quality in each target geographic range in the map.

In an implementation of the eighth aspect, navigation route planning, driving decision making, or vehicle control is performed based on the positioning quality indication information and the map topology information.

In the foregoing implementation, positioning quality of each target geographic range in the map can be quickly learned based on the positioning quality indication information and the map topology information, so that a region, a road, or a lane with relatively poor positioning quality is avoided in a driving process in a timely manner, and driving is performed in a region, a road, or a lane with relatively good positioning quality. This improves accuracy of navigation path planning, driving decision making, or vehicle control.

In an implementation of the eighth aspect, the positioning quality indication information includes average positioning precision of a plurality of location points, an average precision factor DOP value of the plurality of location points, an average quantity of satellites observed at the plurality of location points, or a statistics status indicating whether positioning locations of the plurality of location points are fixed solutions.

The average positioning precision is an error standard deviation of location information of a plurality of location points relative to a reference truth value. Smaller average positioning precision indicates better positioning quality. A larger average number of satellites indicates better positioning quality. An average precision factor DOP value is used to measure an average value of an error amount caused by a geometric location of a satellite relative to an observer (for example, a data collection vehicle that collects the location point), and a smaller average precision factor DOP value indicates better positioning quality. Positioning quality of a positioning location that is a fixed solution is better than positioning quality of a positioning location that is a non-fixed solution. That the positioning location is a fixed solution means that an ambiguity corresponding to a case in which the positioning location is obtained through solving based on a carrier phase is an integer.

In an implementation of the eighth aspect, the map element includes at least one of a region, a road, a lane, an intersection, a toll station, a ramp, a tunnel, and a bridge in the map.

In an embodiment of the eighth aspect, the target geographic range is a region, a road, or a lane in the positioning quality indication information. The region, the road, or the lane in the positioning quality indication information may be an existing region, road, or lane in the map, or may be a region, a road, or a lane that is regenerated according to different segmentation rules. The target geographic range provides a proper range for positioning quality estimation.

In an implementation of the eighth aspect, the target geographic range is a road in the positioning quality indication information, and the road in the positioning quality indication information includes a plurality of roads in the map, or the road in the map includes a plurality of roads in the positioning quality indication information; or the target geographic range is a lane in the positioning quality indication information, and the lane in the positioning quality indication information includes a plurality of lanes in the map, or the lane in the map includes a plurality of lanes in the positioning quality indication information.

In an embodiment of the eighth aspect, the target geographic range is a road in the positioning quality indication information, and the road in the positioning quality indication information has a fixed length; or the target geographic range is a lane in the positioning quality indication information, and the lane in the positioning quality indication information has a fixed length.

In an embodiment of the eighth aspect, the target geographic range is a road in the positioning quality indication information, and an endpoint of the road in the positioning quality indication information is the map element, an endpoint of the map element, or a corner point of the map element; or the target geographic range is a lane in the positioning quality indication information, and an endpoint of the lane in the positioning quality indication information is the map element, an endpoint of the map element, or a corner point of the map element.

In an embodiment of the eighth aspect, the target geographic range is a road in the positioning quality indication information, the road in the positioning quality indication information includes a third group of a plurality of location points, and a midpoint of the road in the positioning quality indication information is a location point with worst positioning quality in the third group of the plurality of location points; or the target geographic range is a lane in the positioning quality indication information, the lane in the positioning quality indication information includes a fourth group of a plurality of location points, and a midpoint of the lane in the positioning quality indication information is a location point with worst positioning quality in the fourth group of the plurality of location points.

In an embodiment of the eighth aspect, the positioning quality indication information further indicates a correspondence between the target geographic range and a road in the map, or indicates a correspondence between the target geographic range and a lane in the map, or indicates a correspondence between the target geographic range and a region in the map.

In an embodiment of the eighth aspect, the positioning quality indication information includes time information, and the time information indicates a valid time of positioning quality in the target geographic range.

According to a ninth aspect, an embodiment of this application provides a map using apparatus. The apparatus includes: a receiving unit, configured to receive a map, where the map includes positioning quality indication information and map topology information, the positioning quality indication information indicates a statistical value of positioning quality in a target geographic range, and the map topology information indicates a location of a map element in the map; and a storage unit, configured to store the map, or a display unit, configured to display the map.

In an implementation of the ninth aspect, the apparatus further includes a processing unit, configured to perform navigation route planning, driving decision making, or vehicle control based on the positioning quality indication information and the map topology information.

In an implementation of the ninth aspect, the positioning quality indication information includes average positioning precision of a plurality of location points, an average precision factor DOP value of the plurality of location points, an average quantity of satellites observed at the plurality of location points, or a statistics status indicating whether positioning locations of the plurality of location points are fixed solutions.

In an implementation of the ninth aspect, the map element includes at least one of a region, a road, a lane, an intersection, a toll station, a ramp, a tunnel, and a bridge in the map.

In an embodiment of the ninth aspect, the target geographic range is a region, a road, or a lane in the positioning quality indication information. The region, the road, or the lane in the positioning quality indication information may be an existing region, road, or lane in the map, or may be a region, a road, or a lane that is regenerated according to different segmentation rules. The target geographic range provides a proper range for positioning quality estimation.

In an implementation of the ninth aspect, the target geographic range is a road in the positioning quality indication information, and the road in the positioning quality indication information includes a plurality of roads in the map, or the road in the map includes a plurality of roads in the positioning quality indication information; or the target geographic range is a lane in the positioning quality indication information, and the lane in the positioning quality indication information includes a plurality of lanes in the map, or the lane in the map includes a plurality of lanes in the positioning quality indication information.

In an embodiment of the ninth aspect, the target geographic range is a road in the positioning quality indication information, and the road in the positioning quality indication information has a fixed length; or the target geographic range is a lane in the positioning quality indication information, and the lane in the positioning quality indication information has a fixed length.

In an embodiment of the ninth aspect, the target geographic range is a road in the positioning quality indication information, and an endpoint of the road in the positioning quality indication information is the map element, an endpoint of the map element, or a corner point of the map element; or the target geographic range is a lane in the positioning quality indication information, and an endpoint of the lane in the positioning quality indication information is the map element, an endpoint of the map element, or a corner point of the map element.

In an embodiment of the ninth aspect, the target geographic range is a road in the positioning quality indication information, the road in the positioning quality indication information includes a third group of a plurality of location points, and a midpoint of the road in the positioning quality indication information is a location point with worst positioning quality in the third group of the plurality of location points; or the target geographic range is a lane in the positioning quality indication information, the lane in the positioning quality indication information includes a fourth group of a plurality of location points, and a midpoint of the lane in the positioning quality indication information is a location point with worst positioning quality in the fourth group of the plurality of location points.

In an embodiment of the ninth aspect, the positioning quality indication information further indicates a correspondence between the target geographic range and a road in the map, or indicates a correspondence between the target geographic range and a lane in the map, or indicates a correspondence between the target geographic range and a region in the map.

In an embodiment of the ninth aspect, the positioning quality indication information includes time information, and the time information indicates a valid time of positioning quality in the target geographic range.

According to a tenth aspect, an embodiment of this application provides a computer-readable storage medium. The computer-readable medium stores computer instructions. When the computer instructions are run by a processor, the method according to any one of the first aspect or the possible implementations of the first aspect is implemented.

According to an eleventh aspect, an embodiment of this application provides a computer-readable storage medium. The computer-readable medium stores computer instructions. When the computer instructions are run by a processor, the method according to any one of the second aspect or the possible implementations of the second aspect is implemented.

According to a twelfth aspect, an embodiment of this application provides a computer-readable storage medium. The computer-readable medium stores computer instructions. When the computer instructions are run by a processor, the method according to any one of the eighth aspect or the possible implementations of the eighth aspect is implemented.

According to a thirteenth aspect, an embodiment of this application provides a map generation apparatus. The apparatus includes a processor and a memory. The processor and the memory are connected or coupled together through a bus. The memory is configured to store program instructions. The processor invokes the program instructions in the memory, to perform the method according to any one of the first aspect or the possible implementations of the first aspect. Usually, a map is generated by a server. In this case, the map generation apparatus may be a map server, or may be a component or a chip in the map server. In addition, the map may alternatively be generated by a roadside device, a vehicle, or a mobile terminal. In this case, the map generation apparatus may be the roadside device, the vehicle, or the mobile terminal, or a component or a chip of the roadside device, the vehicle, or the mobile terminal.

According to a fourteenth aspect, an embodiment of this application provides a map using apparatus. The apparatus includes a processor and a memory. The processor and the memory are connected or coupled together through a bus. The memory is configured to store program instructions. The processor invokes the program instructions in the memory, to perform the method according to any one of the second aspect or the possible implementations of the second aspect. The map using apparatus may be a vehicle, or may be a component (for example, a navigation apparatus or an autonomous driving apparatus in the vehicle) that can be used in the vehicle, or may be a chip that can be used in the vehicle.

According to a fifteenth aspect, an embodiment of this application provides a map using apparatus. The apparatus includes a processor and a memory. The processor and the memory are connected or coupled together through a bus. The memory is configured to store program instructions. The processor invokes the program instructions in the memory, to perform the method according to any one of the eighth aspect or the possible implementations of the eighth aspect. The map using apparatus may be a vehicle, or may be a component (for example, a navigation apparatus or an autonomous driving apparatus in the vehicle) that can be used in the vehicle, or may be a chip that can be used in the vehicle.

According to a sixteenth aspect, an embodiment of this application provides a vehicle. The vehicle includes the map using apparatus according to the fourth aspect, the ninth aspect, the fourteenth aspect, or the fifteenth aspect, or includes the map using apparatus according to any one of the possible implementations of the fourth aspect, the ninth aspect, the fourteenth aspect, or the fifteenth aspect.

According to a seventeenth aspect, an embodiment of this application provides a computer program product. When the computer program product is executed by a processor, the method according to any one of the first aspect or the possible implementations of the first aspect is implemented. The computer program product may be a software installation package. When the method provided in any possible design of the first aspect needs to be used, the computer program product may be downloaded and executed on the processor, to implement the method according to any one of the first aspect or the possible embodiments of the first aspect.

According to an eighteenth aspect, an embodiment of this application provides a computer program product. When the computer program product is executed by a processor, the method according to any one of the second aspect or the possible implementations of the second aspect is implemented. The computer program product may be a software installation package. When the method provided in any possible design of the second aspect needs to be used, the computer program product may be downloaded and executed on the processor, to implement the method according to any one of the second aspect or the possible embodiments of the second aspect.

According to a nineteenth aspect, an embodiment of this application provides a computer program product. When the computer program product is executed by a processor, the method according to any one of the eighth aspect or the possible implementations of the eighth aspect is implemented. The computer program product may be a software installation package. When the method provided in any possible design of the eighth aspect needs to be used, the computer program product may be downloaded and executed on the processor, to implement the method according to any one of the eighth aspect or the possible embodiments of the eighth aspect.

### BRIEF DESCRIPTION OF DRAWINGS

To describe technical solutions in embodiments of this application more clearly, the following briefly describes the accompanying drawings for describing embodiments. It is clear that the accompanying drawings in the following descriptions show merely some embodiments of this application, and a person of ordinary skill in the art may still derive other drawings from these accompanying drawings without creative efforts.
FIG. 1 is a schematic diagram of an application scenario;
FIG. 2 is a diagram of a system architecture according to an embodiment of this application;
FIG. 3 is a schematic diagram of region segmentation in a high definition map;
FIG. 4 is a flowchart of a method for generating a road in positioning quality indication information according to an embodiment of this application;
FIG. 5 is a schematic diagram of a road in a region in a high definition map;
FIG. 6 is a flowchart of a method for generating a lane in positioning quality indication information according to an embodiment of this application;
FIG. 7 is a schematic diagram of a lane in a road in a high definition map;
FIG. 8 is a method flowchart of a map generation method according to an embodiment of this application;
FIG. 9 is a method flowchart of a map using method according to an embodiment of this application;
FIG. 10 is a schematic diagram of a structure of a map generation apparatus according to an embodiment of this application;
FIG. 11 is a schematic diagram of a structure of a map using apparatus according to an embodiment of this application;
FIG. 12 is a schematic diagram of a functional structure of a map generation apparatus according to an embodiment of this application; and
FIG. 13 is a schematic diagram of a functional structure of a map using apparatus according to an embodiment of this application.

### DESCRIPTION OF EMBODIMENTS

The terms used in embodiments of this application are merely for the purpose of illustrating specific embodiments, and are not intended to limit this application. In this specification and the claims in embodiments of this application, terms such as "first", "second", and the like are intended to distinguish between different objects but do not indicate a particular order of the objects.

A high definition map is an auxiliary map for autonomous driving. The high definition map can reflect an actual road in a more realistic manner. The high definition map includes static information and dynamic information. The static information may specifically include road network data, lane network data, safety auxiliary data, and road traffic facility data. A road network mainly includes a road reference network, describes a geometric form of a road, and expresses a relationship between the road and a road facility. Specifically, the road network includes a road reference line, a road reference line connection point, an intersection, and the like. A lane network records a related attribute of each independent lane in the road network, and is used for lane-level road display, positioning, path planning, and driving policy assistance. The lane network includes a lane-level road, a lane-level road connection point, a lane-level road shape point, and the like. The safety assistance data and the road traffic facility data describe lane safety data and another traffic facility on a lane, and are used to assist lane-level positioning and display, for example, curvature, course, and horizontal and vertical slopes. The road traffic facility data includes information such as a traffic sign, a roadside facility, and a fixed object. The dynamic information includes a semi-real-time dynamic element (for example, road maintenance) and a real-time dynamic element (for example, a dynamic obstacle). The semi-real-time dynamic element may be used to perform global path planning in an autonomous driving process, and the real-time dynamic element may be used to perform local path planning in the autonomous driving process.

The high definition map displays a region, a road, and a lane. The lane may be an upstream lane or a downstream lane, and each lane has a unique lane ID. The road includes a plurality of lanes, and each road has a unique road ID. The region includes a plurality of roads, each region has a unique region ID, and the region ID has a corresponding level. A higher level indicates a larger range of a region indicated by a region ID. There may be an intersection between roads, each intersection has a unique intersection ID, and the intersection may be a junction or an endpoint of the road. In addition, the high definition map further displays a connection relationship between roads and a connection relationship between lanes.

Generation of a high definition map depends on positioning data of a location point. Quality of collected positioning data is likely to be affected by a surrounding environment (for example, a tall building and a tree), satellite blocking, and the like. For example, more tall buildings and trees on a roadside cause severer blocking of a satellite signal, and in this case, a deviation of positioning data collected on the road is larger, and quality of the positioning data is also lower. Therefore, quality of positioning data obtained on different map elements (for example, a road and a lane) in a high definition map is different. If positioning data with relatively low quality in a high definition map is used in an autonomous driving process, inaccurate positioning is likely to cause a deviation of a navigation route, and even affects driving safety of a vehicle.

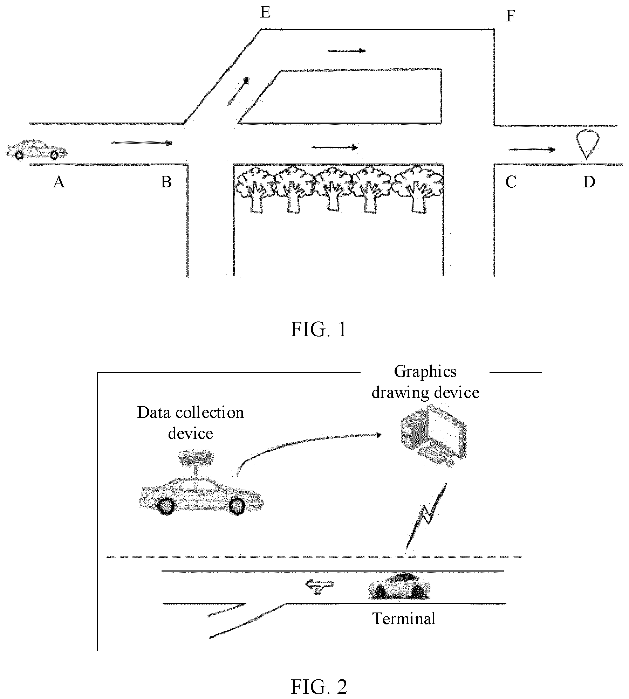

For example, refer to FIG. 1. FIG. 1 is a schematic diagram of an application scenario. It is assumed that a vehicle intends to reach a destination point F from a point A, and a navigation route designed by the vehicle based on a high definition map is A-B-C-D. It can be seen from FIG. 1 that a plurality of trees are planted on a roadside of a road BC, and the branches and leaves are lush. When the vehicle travels on the road BC, positioning data obtained by the vehicle on the road BC has a relatively large deviation because a satellite signal is blocked by the trees or the like, that is, positioning of the vehicle is inaccurate. In this case, a safety accident is likely to occur due to the navigation route deviation. This reduces vehicle travel safety.

In addition, because road segmentation and lane segmentation in the high definition map are random, lengths of roads and lanes in the high definition map are different. Quantities of location points that are collected on different roads and lanes based on factors such as a vehicle speed of a data collection vehicle and a sampling frequency of positioning data of a location point are also different. Therefore, positioning quality of a map element (a lane, a road, or the like) that is estimated based on a segmentation manner of the map element in the high definition map and the positioning data of the location point is also inaccurate. Therefore, it is necessary to provide location information with strong reference and reliability.

To resolve the foregoing problem, embodiments of this application provide a type of positioning quality indication information, indicating a statistical value (for example, an average quantity of satellites and average positioning precision) of positioning quality in a target geographic range in the positioning quality indication information. The target geographic range may have a correspondence with a region, a road, or a lane in a high definition map, so that a vehicle can selectively use positioning information in the high definition map based on the positioning quality indication information in an autonomous driving process, that is, avoid a region, a road, or a lane with relatively poor positioning quality in the high definition map, thereby improving a travel safety rate of the autonomous driving vehicle.

The following describes technical solutions of this application with reference to accompanying drawings.

FIG. 2 shows an example diagram of a system architecture. The system is configured to generate positioning quality indication information. As shown in FIG. 2, the system includes a data collection device, a graphics drawing device, and a terminal. The data collection device and the graphics drawing device may be connected in a wireless or wired manner, and the graphics drawing device and the terminal may be connected in a wireless manner.

The data collection device is usually installed on a data collection vehicle, and the data collection device is configured to collect raw data used for making the positioning quality indication information. The data collection device may be an RTK device. The RTK device includes either a GPS or a GNSS, and obtains positioning information in an RTK measurement manner. For example, the RTK device may be configured to record location information of each track point and quality information of each track point when a data collection vehicle in which the RTK device is located travels in a target region.

The graphics drawing device is configured to make corresponding positioning quality indication information based on a map and the raw data collected by the data collection device. The map may be a high definition map, or another type of map including a region, a road, and a lane. This is not specifically limited in embodiments of this application. The map may be pre-stored in a memory of the graphics drawing device, or may be obtained by the graphics drawing device from another device (for example, a map server). In a specific implementation, the graphics drawing device is further configured to add the positioning quality indication information to the foregoing map. The graphics drawing device may be a device having a computing function, for example, a computer, a server, or a multi-access edge computing (Multi-Access Edge Computing, MEC) device.

The terminal may be a vehicle, for example, a common vehicle or an autonomous driving vehicle. The vehicle may be a sedan, a car, a tourist bus, a bicycle, a tricycle, an electric bike, a motorcycle, a truck, or the like. Alternatively, the vehicle may be an electric vehicle, a hybrid vehicle, an extended range electric vehicle, a plug-in hybrid vehicle, or the like. In addition, the terminal may be a roadside unit (Road Side Unit, RSU), an on board unit (On board Unit, OBU), a portable mobile device (for example, a mobile phone or a tablet), or another sensor or device that can communicate with the graphics drawing device, such as a component or a chip of the portable mobile device. This is not specifically limited in embodiments of this application.

It should be noted that FIG. 2 is only an example diagram of an architecture, and a quantity of network elements included in the system shown in FIG. 2 is not limited. Although not shown in FIG. 2, another functional entity may further be included in FIG. 2 in addition to the functional entities shown in FIG. 2. In addition, the method provided in embodiments of this application may be applied to the communication system shown in FIG. 2. Certainly, the method provided in embodiments of this application may also be applied to another communication system. This is not limited in embodiments of this application.

It should be noted that, for ease of description, the following uses a vehicle as an example of a terminal and a high definition map as an example of a map to describe the solution. However, in embodiments of this application, the terminal is not limited to a vehicle, and the map is not limited to a high definition map.

The positioning quality indication information may be represented in a form of a table, a graph, a text, or the like. This is not specifically limited in embodiments of this application. It should be noted that the positioning quality indication information may also be referred to as a positioning quality information layer, a positioning quality mapping table, or the like.

Before the positioning quality indication information is generated, a high definition map and M track points need to be obtained first. The M track points are collected in advance when a data collection vehicle on which an RTK device is installed travels in each lane shown in the high definition map. Each track point has location information and quality information. The location information indicates a location of the track point in a high definition map, and the location information may be represented by longitude and latitude. The quality information of the track point includes a quantity of satellites that can be observed at the track point, a precision factor (Dilution of Precision, DOP) value, positioning precision of the track point, information indicating whether the location information of the track point is a fixed solution, or the like. The quality information of the track point may be used to measure positioning quality of the track point at a corresponding location in the high definition map. Because the high definition map includes three map elements: a region, a road, and a lane, each of the M track points has a corresponding region ID, road ID, and lane ID in the high definition map. It should be noted that a correspondence between a track point and a region ID, a road ID, or a lane ID in the high definition map may be determined in advance based on the location information of the track point and a coordinate range of a map element in the high definition map. The map element includes at least one of a region, a road, a lane, an intersection, a toll station, a gas station, a ramp, a tunnel, and a bridge in the high definition map. It should be noted that the track point may also be referred to as a location point.

A process of generating the positioning quality indication information may be divided into three parts in a space dimension.

Part 1: Generate a region in the positioning quality indication information.

Each region id generated in the positioning quality indication information indicates a region in the high definition map, and each region in the high definition map includes a plurality of roads. Because each region in the high definition map has a unique region ID, each region id generated in the positioning quality indication information may be in a one-to-one correspondence with the region ID in the high definition map. Each region id in the positioning quality indication information corresponds to a plurality of track points in the M track points, and positioning quality of each region id is obtained based on quality information of the track points corresponding to each region id. In other words, the positioning quality of each region id is a statistical value obtained based on the quality information of the plurality of track points corresponding to the region id, for example, an average quantity of satellites and an average DOP value. The positioning quality of each region id in the positioning quality indication information may indicate positioning quality of a corresponding region in the high definition map.

Specifically, in the positioning quality indication information, the region in which the M track points in the positioning quality indication information are located is segmented in a same region segmentation manner as that of the high definition map, so that the region in the positioning quality indication information is consistent with the region in the high definition map. A region generated in the positioning quality indication information is represented by a region id, and region ids in the positioning quality indication information are in a one-to-one correspondence with region IDs in the high definition map. In other words, the region of the positioning quality indication information may be generated based on the location information and the quality information that are corresponding to each of the M track points, and location information of each region in the high definition map.

In a specific implementation, a region segmentation manner of the high definition map is cross segmentation, and the entire map is segmented into regions of several levels. Correspondingly, a region id that is the same as a region ID generated in the positioning quality indication information based on the region ID that is in the high definition map and that corresponds to each of the M track points, so that the region id in the positioning quality indication information is in a one-to-one correspondence with the region ID in the high definition map. In addition, in the positioning quality indication information, each region id corresponds to a plurality of track points in the M track points, and positioning quality of each region id may be obtained through statistics on quality information of the track points corresponding to each region id. The positioning quality of each region id in the positioning quality indication information indicates positioning quality of a corresponding region in the high definition map. It may be understood that the high definition map includes regions of several levels, and correspondingly, the positioning quality indication information also includes regions of several levels.

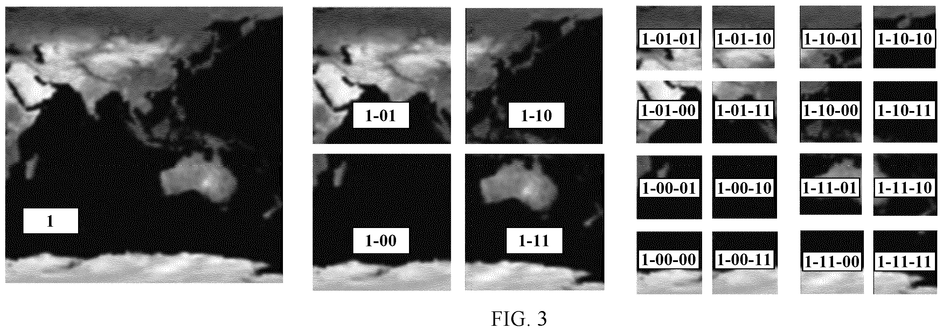

FIG. 3 is a schematic diagram of region segmentation in a high definition map. It can be seen that, four parts are first obtained through one cross segmentation of a map 1, and the four parts are numbered clockwise, to obtain four region IDs: 1-00, 1-01, 1-10, and 1-11 at the level of the map 1. Then, cross segmentation continues to be performed on each of the four parts 1-00, 1-01, 1-10, and 1-11. For example, for the map 1-00, the map 1-00 is segmented into four parts, and the four parts are numbered clockwise, to obtain four region IDs: 1-00-00, 1-00-01, 1-00-10, and 1-00-11 at the level of the map 1-00. Similarly, if cross segmentation is performed on the map 1-01, four region IDs may be obtained: 1-01-00, 1-01-01, 1-01-10, and 1-01-11; if cross segmentation is performed on the map 1-10, four region IDs may be obtained: 1-10-00, 1-10-01, 1-10-10, and 1-10-11; and if the map 1-11 is cross-segmented, four region IDs may be obtained: 1-11-00, 1-11-01, 1-11-10, and 1-11-11. Region segmentation is performed in this manner until a range of a minimum-level region meets a preset threshold. It can be learned from FIG. 3 that the map 1 has three levels of regions. Level 1 includes a region ID in the map 1, level 2 includes four region IDs: 1-00, 1-01, 1-10, and 1-11, and level 3 includes 16 region IDs: 1-00-00, 1-00-01, 1-00-10, 1-00-11, 1-01-00, 1-01-01, 1-01-10, 1-01-11, 1-10-00, 1-10-01, 1-10-10, 1-10-11, 1-11-00, 1-11-01, 1-11-10, and 1-11-11.

The following specifically describes, based on FIG. 3, a process of generating each region in the positioning quality indication information. Because the high definition map shown in FIG. 3 has three levels of regions, each of the M track points corresponds to three region IDs in FIG. 3.

In a specific implementation, a region in the positioning quality indication information is generated according to a descending order of region ranges. A larger region range indicates a higher level of a region ID of the region. To be specific, a highest-level region ID that is in the region IDs in the high definition map and that corresponds to the M track points is first determined, and it can be learned from FIG. 3 that there is only one highest-level region ID, namely, "1". In this case, a region id of a level 1 (highest level) in the positioning quality indication information is generated to be "1". Then, a second-level region ID that is in the region IDs in the high definition map and that corresponds to the M track points is determined, and it can be learned from FIG. 3 that there are "1-00, 1-01, 1-10, and 1-11". In this case, region ids of a level 2 (level lower than the highest level) in the positioning quality indication information are established, and include "1-00", "1-01 ", "1-10", and "1-11". Finally, 16 lowest-level region IDs that are in the region IDs in the high definition map and that correspond to the M track points are determined, and include "1-00-00, 1-00-01, 1-00-10, 1-00-11 ..." (for details, refer to related descriptions in FIG. 3). In this case, region ids of level 3 (level lower than the level 2) in the positioning quality indication information are established, and include 16 regions such as "1-00-00", "1-00-01", "1-00-10", "1-00-11", and so on (for details, refer to related descriptions in FIG. 3). In addition, a correspondence between region ids in the positioning quality indication information further needs to be established. A correspondence between region ids in the positioning quality indication information may be determined according to a numbering rule of region IDs in FIG. 3. For example, the region id "1" of the level 1 separately corresponds to the region ids "1-00", "1-01", "1-10", and "1-11" of the level 2, and the region id "1-00" of the level 2 separately corresponds to the region ids "1-00-00", "1-00-01", "1-00-10", and "1-00-11" of the level 3. It should be noted that a region indicated by each region id in the positioning quality indication information includes at least one of the M track points.

In another specific implementation, a region in the positioning quality indication information may be generated according to an ascending order of region ranges. To be specific, a region id corresponding to the level 3, a region id corresponding to the level 2, and a region id corresponding to the level 1 are sequentially established in the positioning quality indication information in ascending order based on levels of region IDs that are in the high definition map shown in FIG. 3 and that correspond to the M track points. In addition, a correspondence between region ids of all levels in the positioning quality indication information is established according to a numbering rule of each region ID in FIG. 3. It should be noted that, according to the numbering rule of the region IDs in FIG. 3, a location relationship between regions indicated by region ids of a same level in the positioning quality indication information may be further obtained. For example, for region ids "1-00", "1-01 ", "1-10", and "1-11" of the level 2 in the positioning quality indication information, because four region IDs "1-00", "1-01", "1-10", and "1-11" are sequentially encoded in a clockwise direction, it may be learned that the region indicated by "1-01" is located on the direct right of the region indicated by "1-00", the region indicated by "1-10" is located on the lower right of the region indicated by "1-00", the region indicated by "1-11" is located directly below the region indicated by "1-00", and the like.

After the region in the positioning quality indication information is generated, a region mapping table including a region topology relationship and a track point may be obtained. The region mapping table may be shown in Table 1. Table 1 lists track points corresponding to each region id that belongs to the level 3. It can be learned from Table 1 that there are 16 region ids belonging to the level 3, which are respectively "1-00-00", "1-00-01", "1-00-10", "1-00-11". "1-01-00", "1-01-01", "1-01-10", "1-01-11", "1-10-00", "1-10-01", "1-10-10", "1-10-11", "1-11-00", "1-11-01", "1-11-10", and "1-11-11". Positioning quality of each region id in Table 1 is a statistical value obtained based on quality information of a track point corresponding to the region id. In addition, Table 1 may further store a mapping relationship between a region id (namely, "1") belonging to the level 1, region ids (for example, "1-00", "1-01", "1-10", and "1-11") belonging to the level 2, and region ids of different levels in the positioning quality indication information. For example, the region id "1-00" of the level 2 separately corresponds to the region ids "1-00-00", "1-00-01", "1-00-10", and "1-00-11" of the level 3, and the region id "1" of the level 1 separately corresponds to the region ids "1-00", "1-01", "1-10", and "1-11" of the level 2. Based on Table 1, in a specific implementation, positioning quality of the region id of the level 2 may be obtained based on quality information of a track point corresponding to each region id of the level 2. For example, track points corresponding to the region id "1-00" is a sum of track points corresponding to the four region ids: "1-00-00", "1-00-01", "1-00-10", and "1-00-11". In another specific implementation, the positioning quality of the region id of the level 2 may alternatively be estimated based on positioning quality of region ids of the level 3 corresponding to the region id of the level 2. It is easy to learn that a quantity of track points in a region indicated by the region id "1" is M. It should be noted that the region ids listed in Table 1 are generated by using the region generation method in the foregoing positioning layer. Therefore, the region ids listed in Table 1 are in a one-to-one correspondence with the region IDs in the high definition map.

**Table 1**

| Level 1: region id | Level 2: region id | Level 3: region id | Track point | Positioning quality |
|---|---|---|---|---|
| 1 | 1-00 | 1-00-00 | ... | |
| | | 1-00-01 | ... | |
| | | 1-00-10 | ... | |
| | | 1-00-11 | ... | |
| | 1-01 | 1-01-00 | ... | |
| | | 1-01-01 | ... | |
| | | 1-01-10 | ... | |
| | | 1-01-11 | ... | |
| | 1-10 | 1-10-00 | ... | |
| | | 1-10-01 | ... | |
| | | 1-10-10 | ... | |
| | | 1-10-11 | ... | |
| | 1-11 | 1-11-00 | ... | |
| | | 1-11-01 | ... | |
| | | 1-11-10 | ... | |
| | | 1-11-11 | ... | |

After the region in the positioning quality indication information is generated, each region includes at least one track point, and quality information of each track point includes a quantity of satellites that can be observed at the track point, a DOP value, positioning precision of the track point, and the like. Positioning quality of the region id is estimated based on quality information of each track point corresponding to each region id. For example, the positioning quality of the region id includes one or more of an average quantity of satellites, an average DOP value, average positioning precision, and the like. This is not specifically limited in embodiments of this application.

Specifically, refer to Table 1. The region id "1-00-00" is used as an example. Positioning quality of the region id "1-00-00" may be calculated based on quality information of a track point corresponding to the region id "1-00-00", and positioning quality of a region corresponding to each region id of the level 3 may be calculated. Then, positioning quality of each region id belonging to the level 2 in the positioning quality indication information is calculated. The region id "1-00" is used as an example. Positioning quality of the region id "1-00" may be an average value of positioning quality of four regions indicated by the region ids "1-00-00", "1-00-01", "1-00-10", and "1-00-11". Finally, positioning quality of the region id "1" may be an average value of positioning quality of four regions indicated by the region ids "1-00", "1-01", "1-10", and "1-11".

It can be learned that, based on the high definition map and related information (for example, the location information and the quality information) of the track point, a region id in the positioning quality indication information is generated, and positioning quality of the region id is obtained through statistical calculation, so that positioning quality of a corresponding region in the high definition map can be learned of based on the positioning quality indication information. This enriches layer information of the high definition map, helps a vehicle effectively avoid a region with poor positioning quality in a driving process based on the positioning quality indication information and the high definition map, and improves positioning quality and a travel safety rate of the autonomous driving vehicle.

Part 2: Generate a road in the positioning quality indication information.

Each road id generated in the positioning quality indication information represents a road in the positioning quality indication information, and each road id may correspond to one or more roads in the high definition map. Because each road in the high definition map has a unique road ID, each road id in the positioning quality indication information corresponds to one or more road IDs in the high definition map. Each road id in the positioning quality indication information corresponds to a plurality of track points in the M track points. Positioning quality of each road id is obtained based on quality information of the track points corresponding to each road id. To be specific, the positioning quality of each road id is a statistical value obtained based on quality information (for example, a quantity of satellites and a DOP value) of the plurality of track points corresponding to the road id, for example, an average quantity of satellites and an average DOP value. The positioning quality of each road id in the positioning quality indication information may indicate positioning quality of a corresponding road in the high definition map.

There are mainly the following two manners of generating a road in the positioning quality indication information.

### Manner 1: Road topology relationship-based generation

Specifically, for a track point corresponding to each lowest-level region id in the positioning quality indication information, because there is a correspondence between the region id in the positioning quality indication information and a region ID in the high definition map, and each region ID in the high definition map corresponds to at least one road ID in the high definition map, a road ID in the high definition map that corresponds to each track point in the track points corresponding to the region id in the positioning quality indication information may be obtained, and a road id in the positioning quality indication information is generated based on a connection relationship between roads indicated by a road ID in the high definition map. The road id in the positioning quality indication information corresponds to at least one of a plurality of road IDs in the high definition map corresponding to a region id to which the road id belongs. In some possible embodiments, the road ID in the high definition map may alternatively correspond to a plurality of road ids in the positioning quality indication information.

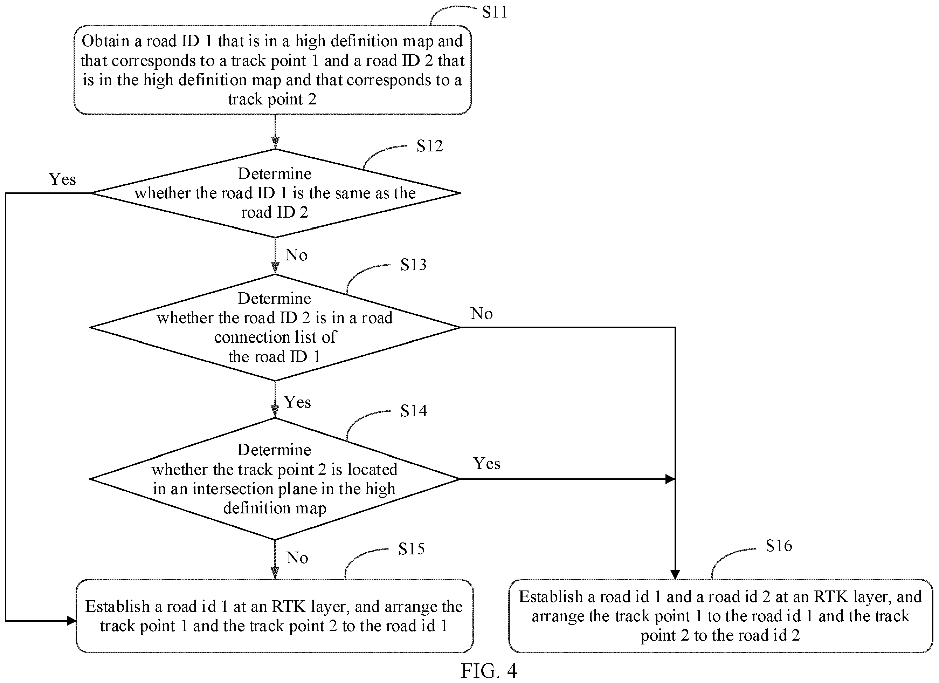

FIG. 4 is a flowchart of a method for generating a road in positioning quality indication information in Manner 1 according to an embodiment of this application. The method may be performed by the graphics drawing device in FIG. 1. The method includes but is not limited to the following steps.

S11: Obtain a road ID 1 that is in a high definition map and that corresponds to a track point 1 and a road ID 2 that is in the high definition map and that corresponds to a track point 2.

The track point 1 and the track point 2 are adjacent track points, and both the track point 1 and the track point 2 correspond to a same region id in positioning quality indication information. In a specific implementation, a road ID that is in the high definition map and that corresponds to a track point may be determined based on location information of the track point and a coordinate range of a road in the high definition map.

S12: Determine whether the road ID 1 is the same as the road ID 2.

If the road ID 1 and the road ID 2 are the same, it indicates that the track point 1 and the track point 2 belong to a same road in the high definition map, and S15 is performed. If the road ID 1 and the road ID 2 are not the same, it indicates that the track point 1 and the track point 2 do not belong to a same road in the high definition map, and S13 is performed.

S13: Determine whether the road ID 2 is in a road connection list of the road ID 1.

When the road ID 2 is in the road connection list of the road ID 1, it indicates that, in the high definition map, there is a connection relationship between the road ID 2 on which the track point 2 is located and the road ID 1 on which the track point 1 is located, and S 14 is performed. When the road ID 2 is not in the road connection list of the road ID 1, it indicates that, in the high definition map, there is no connection relationship between the road ID 2 on which the track point 2 is located and the road ID 1 on which the track point 1 is located, and S16 is performed.

S14: Determine whether the track point 2 is located in an intersection plane in the high definition map.

Each intersection in the high definition map has a corresponding coordinate range. That the track point 2 is located in an intersection plane means that the track point 2 is located in a coordinate range of the intersection, and that the track point 2 is not located in the intersection plane means that the track point 2 is not located in the coordinate range of the intersection. If the track point 2 is located in the intersection plane in the high definition map, S16 is performed. If the track point 2 is not located in the intersection plane in the high definition map, S15 is performed.

S15: Establish a road id 1 in the positioning quality indication information, and arrange the track point 1 and the track point 2 to the road id 1.

When any one of the following conditions is met, the track point 1 and the track point 2 correspond to a same road in the positioning quality indication information.

A11: The road ID 1 and the road ID 2 are the same.

A12: The road ID 1 and the road ID 2 are not the same, but the road ID 2 is located in the road connection list of the road ID 1 and the track point 2 is not located in the intersection plane in the high definition map.

It may be understood that, when the foregoing case A11 is met, there is a correspondence between the road id 1 in the positioning quality indication information and the road ID 1 (or the road ID 2) in the high definition map; or when the foregoing case A12 is met, there is a correspondence between the road id 1 in the positioning quality indication information and the road ID 1 and the road ID 2 in the high definition map.

S16: Establish a road id 1 and a road id 2 in the positioning quality indication information, and arrange the track point 1 to the road id 1 and the track point 2 to the road id 2.

When any one of the following conditions is met, the track point 1 and the track point 2 correspond to different roads in the positioning quality indication information.

B11: The road ID 1 and the road ID 2 are not the same, and the road ID 2 is not in the road connection list of the road ID 1.

B12: The road ID 1 and the road ID 2 are not the same, and the road ID 2 is located in the road connection list of the road ID 1 but the track point 2 is located in the intersection plane in the high definition map.

The case B11 is explained as follows: The track point 1 and the track point 2 are adjacent track points, but in the high definition map, there is no connection relationship between a road on which the track point 1 is located and a road on which the track point 2 is located. This is because there is a road between the road on which the track point 1 is located and the road on which the track point 2 is located. However, because the road is relatively short in length, and a vehicle speed of a data collection vehicle is relatively fast, that is, time (which is less than a sampling interval of a track point) for the data collection vehicle to pass the road is short, the data collection vehicle fails to collect the track point on the road. Consequently, there is no connection relationship between two roads that are determined based on adjacent track points, and a road jump occurs.

It may be understood that, in case B11 and case B12, there is a correspondence between the road id 1 in the positioning quality indication information and the road ID 1 in the high definition map, and there is a correspondence between the road id 2 in the positioning quality indication information and the road ID 2 in the high definition map.

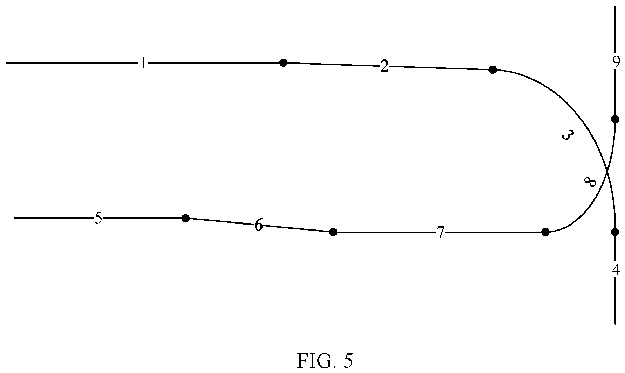

FIG. 5 is a schematic diagram of a road in a region in a high definition map. FIG. 5 shows nine roads, and lengths of the roads are different. The nine roads form two road connection lines. A road connection line 1 includes a road 1, a road 2, a road 3, and a road 4. Specifically, the road 1 is connected to the road 2, the road 2 is connected to the road 3, the road 3 is located in an intersection plane, and the road 3 is connected to the road 4. The road connection line 2 includes a road 5, a road 6, a road 7, a road 8, and a road 9. Specifically, the road 5 is connected to the road 6, the road 6 is connected to the road 7, the road 7 is connected to the road 8, the road 8 is located in the intersection plane, and the road 8 is connected to the road 9.

It is assumed that, in positioning quality indication information, a quantity of track points corresponding to the road shown in FIG. 5 is M1, and the M1 track points are distributed in each road shown in FIG. 5. A quantity of track points included in each road in FIG. 5 is related to a length of the road, a sampling frequency of the track point, and a vehicle speed of the data vehicle. When the sampling frequency of the track point and the vehicle speed remain unchanged, a longer length of the road indicates a larger quantity of track points corresponding to the road. Based on location information of the M1 track points and coordinate ranges of the roads in the high definition map, it may be determined that road IDs that are in the high definition map and that correspond to the M1 track points include 1, 2, 3, 4, ..., and 9. If a road id in the positioning quality indication information is generated by using the method shown in FIG. 4 and FIG. 5, a correspondence between the road id generated in the positioning quality indication information and a road ID in the high definition map may be shown in Table 2. In Table 2, road ids generated in the positioning quality indication information include: a1, a2, a3, and a4, where a1 corresponds to the road 1 and the road 2 in the high definition map, a2 corresponds to the road 3 and the road 4 in the high definition map, a3 corresponds to the road 5, the road 6, and the road 7 in the high definition map, and a4 corresponds to the road 8 and the road 9 in the high definition map. In addition, Table 2 further lists track points included in road IDs that are in the high definition map and that correspond to the road ids. In some possible embodiments, correspondences between road ids "a1 ", "a2", "a3", and "a4" and region ids in the positioning quality indication information may further be added to Table 2, to indicate that a road indicated by the road id belongs to a region indicated by the region id.

An example in which a1 in Table 2 corresponds to the road 1 and the road 2 in the high definition map is used for related explanation. That a1 corresponds to the road 1 and the road 2 in the high definition map means that in the positioning quality indication information, the road 1 in the high definition map and the road 2 in the high definition map are considered as one road a1, or the road a1 in the positioning quality indication information indicates a road including the road 1 and the road 2 in the high definition map.

Refer to Table 2. After the road id in the positioning quality indication information is generated, positioning quality of the road id may be calculated based on Table 2 and quality information of track points corresponding to the generated road id. For example, the positioning quality of the region id includes one or more of an average quantity of satellites, an average DOP value, average positioning precision, and the like. This is not specifically limited in embodiments of this application. An example in which positioning quality of the road a1 in Table 2 is calculated. The positioning quality of the road a1 in the positioning quality indication information may be calculated based on quality information of track points corresponding to the road 1 and quality information of track points corresponding to the road 2. It may be understood that the positioning quality of the road a1 may be used as positioning quality of the road 1 in the high definition map, and may also be used as positioning quality of the road 2 in the high definition map.

It can be learned from Table 2 that, there is one road id that is in the positioning quality indication information and that correspond to a plurality of road IDs in the high definition map. This one-to-many road mapping form can effectively improve accuracy of estimated positioning quality of a road in the high definition map. Specific description is provided with reference to FIG. 5. It can be learned from FIG. 5 that lengths of roads in the high definition map are different. When a sampling frequency of a track point and a vehicle speed are fixed, a shorter length of the road indicates a smaller quantity of track points collected by the data collection vehicle on the road. It is assumed that a quantity of track points corresponding to the road 6 in FIG. 5 is the smallest. If positioning quality of the road 6 is calculated based only on quality information of track points corresponding to the road 6, a positioning quality level of the road 6 cannot be accurately represented because the quantity of the track points is small. However, in the positioning quality indication information, the road 5, the road 6, and the road 7 in the high definition map are used as one road, namely, the road a1 in the positioning quality indication information. Therefore, positioning quality of the road a1 may be calculated based on quality information of track points corresponding to the three roads: the road 5, the road 6, and the road 7, and the positioning quality of the road a1 may indicate positioning quality of any one of the road 5, the road 6, and the road 7 in the high definition map.

**Table 2**

| Road id | Road ID in a high definition map | Track point | Positioning quality |
|---|---|---|---|
| a1 | 1 | ... | |
| | 2 | ... | |
| a2 | 3 | ... | |
| | 4 | ... | |
| a3 | 5 | ... | |
| | 6 | ... | |
| | 7 | ... | |
| a4 | 8 | ... | |
| | 9 | ... | |

In some possible embodiments, a road in the positioning quality indication information may further be generated based on a fixed length and a length of each road that is in the high definition map and on which the M track points are located, and the road in the positioning quality indication information is represented by a road id, so that lengths of roads indicated by road ids in the positioning quality indication information are as equal as possible. For example, it is assumed that roads that are in the high definition map and that correspond to the obtained plurality of track points include the road 5, the road 6, the road 7, the road 8, and the road 9 (which is the road connection line 2) in FIG. 5. The road in the positioning quality indication information may be generated based on a length of the road that is in the high definition map and on which the track point is located. In this case, a mapping result between each road in the road connection line 2 in FIG. 5 and the road generated in the positioning quality indication information may be represented in a form shown in Table 3.

It can be learned from Table 3 that there are three roads generated in the positioning quality indication information: a road b1, a road b2, and a road b3, and lengths of the road b1, the road b2, and the road b3 are the same. The road b1 corresponds to the road 5 and the road 6 in the high definition map, the road b2 corresponds to the road 6 and the road 7 in the high definition map, and the road b3 corresponds to the road 8 and the road 9 in the high definition map. It can be learned from Table 3 that the road 6 in the high definition map separately corresponds to the road b1 and the road b2 in the positioning quality indication information, and there are four track points on the road 6. The road b1 corresponds to three track points on the road 6 in the high definition map, which are respectively a point 6, a point 7, and a point 8, and the road b2 corresponds to two track points on the road 6 in the high definition map, which are respectively a point 8 and a point 9. In a specific implementation, a length of the road b1 may be a sum of a length of the road 5 in the high definition map and a distance between a start point of the road 6 and the point 8, a length of the road b2 may be a sum of a length of the road 7 and a distance between the point 8 and an end point of the road 6, and a length of the road b3 may be a sum of a length of the road 8 and a length of the road 9 in the high definition map.

It should be noted that the manner of generating a road in positioning quality indication information based on a fixed length may be applied to a high-speed road, or may be applied to an urban road. This is not specifically limited in embodiments of this application. For example, in a case of 120 km/h of a speed limit of a high-speed road, a fixed length can be set to "4 km". For another example, in a case of 60 km/h of a speed limit of an urban road, a fixed length can be set to "2 km". The setting of the fixed length is merely an example, and the fixed length may alternatively be set to another value based on an actual requirement. This is not specifically limited in embodiments of this application.

**Table 3**

| Road id | Road ID in a high definition map | Track point | Positioning quality |
|---|---|---|---|
| b1 | 5 | ... | |
| | 6 | Point 6, point 7, and point 8 | |
| b2 | 6 | Point 8 and point 9 | |
| | 7 | ... | |
| b3 | 8 | ... | |
| | 9 | ... | |

### Manner 2: Adaptive road segmentation using a track point with lowest quality as a center

Specifically, for a track point corresponding to each lowest-level region ID in the positioning quality indication information, a road ID that is in the high definition map and that corresponds to each track point in the track points corresponding to the region ID is obtained, and a plurality of road connection lines are first established based on a connection relationship between roads indicated by the road IDs in the high definition map. It may be understood that each road connection line includes roads indicated by a plurality of road IDs in the high definition map. Then, quality of each track point is determined based on quality information of a track point corresponding to each road ID in each road connection line, and a track point with lowest quality in the road connection line is determined. The track point with lowest quality is used as a center, and a preset length threshold is separately extended along an upstream direction and a downstream direction of a road on which the track point with lowest quality is located. A corresponding road id is generated in the positioning quality indication information based on an extension result, and a correspondence between the road id and each road ID in the road connection line is established. In this way, adaptive segmentation of a road in the positioning quality indication information that corresponds to each road ID in the high definition map and that corresponds to the road connection line is completed.

If road segmentation in the positioning quality indication information in FIG. 5 is performed in Manner 2, it can be learned that there are two road connection lines in FIG. 5. The road connection line 1 includes the road 1, the road 2, the road 3, and the road 4, and the road connection line 2 includes the road 5, the road 6, the road 7, the road 8, and the road 9. The road connection line 2 is used as an example. Quality of track points on each road in the road connection line 2 is determined, and it is determined that a track point with lowest quality is located on the road 7. The track point with lowest quality on the road 7 is used as a center, and extends to the point 1 along an upstream direction (that is, to the left) of the road 7 and extends to the point 2 along a downstream direction (that is, to the right) of the road 7. Distances between the point 1 and the track point with lowest quality on the road 7 and between the point 2 and the track point with lowest quality on the road 7 are both a preset length threshold. If both the point 1 and the point 2 are located on the road 7, for each road in the road connection line 2 in FIG. 5, three road ids are generated in the positioning quality indication information: a road 01, a road 02, and a road 03. The road 7 corresponds to the road 01, the road 5 and the road 6 correspond to the road 02, and the road 8 and the road 9 correspond to the road 03. It may be understood that a length of the road 01 is a distance between the point 1 and the point 2, that is, twice the preset length threshold, and the track point with lowest quality on the road 7 is a midpoint on the road 01.

For another example, the road connection line 2 in FIG. 5 is used as an example. It is assumed that a track point with lowest quality is located on the road 6. In this case, the track point with lowest quality on the road 6 is used as a center, and extends to the point 3 in an upstream direction (that is, to the left) of the road 6 and extends to the point 4 in a downstream direction (that is, to the right) of the road 6. Distances between the point 3 and the track point with lowest quality on the road 6 and between the point 4 and the track point with lowest quality on the road 6 are both a preset length threshold. If the point 3 is located on the road 5 in FIG. 5 and the point 4 is located on coordinates 7 in FIG. 5, for each road in the road connection line 2 in FIG. 5, two road ids are generated in the positioning quality indication information. The road 6 and the road 7 correspond to a same road id, and the road 8 and the road 9 correspond to a same road id.

The determining of the track point with lowest quality on the road may be as follows: In a specific implementation, if the quality information of the track point includes only a quantity of satellites, a track point with a minimum quantity of satellites in track points corresponding to each road is the track point with lowest quality, or a track point with a quantity of satellites less than a preset threshold 1 in track points corresponding to each road may be the track point with lowest quality. In another specific implementation, if the quality information of the track point includes only a DOP value, a track point with a maximum DOP value in track points corresponding to each road is the track point with lowest quality. In another specific implementation, if the quality information of the track point includes a quantity of satellites and a DOP value, the quality of the track point may be comprehensively measured based on the quantity of satellites of the track point and the DOP value.

After the road id in the positioning quality indication information is generated in Manner 2, a mapping table (for example, Table 2) including the road id in the positioning quality indication information, the road ID in the high definition map, and the like may be obtained. Positioning quality of each road id may be obtained based on quality information of a track point corresponding to each road id. For a specific process, refer to the foregoing descriptions. Details are not described herein again.

In some possible embodiments, a road in the positioning quality indication information may be further generated based on a feature point in the high definition map, and an endpoint of the road in the positioning quality indication information is the feature point in the high definition map. The feature point in the high definition map includes but is not limited to a road endpoint, a lane endpoint, a ramp endpoint, a tunnel endpoint, a bridge endpoint, a gas station, a toll station, a corner point of a region, a corner point of an intersection, or the like. In a specific implementation, when a road type indicated by the road ID that is in the high definition map and that corresponds to the track point is a high-speed type, a high-speed road may be generated in the positioning quality indication information in the feature point-based road segmentation manner.

In some possible embodiments, in addition to re-segmenting a region, a road, or a lane in the high definition map in Manner 1 or Manner 2 to generate a region, a road, or a lane in the positioning quality indication information, a road id in the positioning quality indication information may also be generated directly based on the positioning quality indication information and a road ID in the high definition map on which a track point is located, so that the road id in the positioning quality indication information is in a one-to-one correspondence with the road ID in the high definition map. For example, nine road IDs are shown in FIG. 5. In this case, nine road ids may also be generated in the positioning quality indication information, and the nine road ids in the positioning quality indication information are in a one-to-one correspondence with the nine road IDs in the high definition map shown in FIG. 5. In this case, positioning quality corresponding to each road id indicates only positioning quality of a corresponding road in the high definition map.

In conclusion, it can be learned that, when a road in the positioning quality indication information is generated, in addition to location information and quality information of a track point, if the road in the positioning quality indication information is generated in a topology relationship of the road in the high definition map, location information of a region, a road, and an intersection in the high definition map further needs to be combined; or if the road in the positioning quality indication information is generated in a fixed length manner or in a adaptive manner in which a track point with lowest quality is used as a center, only location information of the road in the high definition map may be used; or if the road in the positioning quality indication information is generated in a manner of a feature point in the high definition map, location information of map elements such as a road, an intersection, a gas station, a toll station, and a bridge in the high definition map needs to be used. In some possible embodiments, the road in the positioning quality indication information may further be generated based on another possible combination manner of a region, a road, a lane, an intersection, a toll station, a ramp, a tunnel, a bridge, and the like in the high definition map. This is not specifically limited in embodiments of this application.

It can be learned that, based on the location information of the road in the high definition map and the related information (for example, the location information and the quality information) of the track point, the road id in the positioning quality indication information is generated, and the positioning quality of the road id is obtained through statistics, so that positioning quality of a corresponding road in the high definition map can be known based on a mapping relationship between the road in the positioning quality indication information and the road in the high definition map. This enriches layer information of the high definition map, helps the vehicle effectively avoid a road with relatively poor positioning quality in a driving process based on the positioning quality indication information and the high definition map, and improves positioning quality and a travel safety rate of the autonomous driving vehicle.

Part 3: Generate a lane in the positioning quality indication information.

Each lane id generated in the positioning quality indication information indicates a lane in the positioning quality indication information. Each lane id in the positioning quality indication information may correspond to one or more lanes in the high definition map. Because each lane in the high definition map has a unique lane ID, each lane id generated in the positioning quality indication information corresponds to one or more lane IDs in the high definition map. Each lane id in the positioning quality indication information corresponds to a plurality of track points in the M track points. Positioning quality of each lane id is obtained based on quality information of the track points corresponding to each lane id. To be specific, the positioning quality of each lane id is a statistical value obtained based on the quality information (for example, a quantity of satellites and a DOP value) of the plurality of track points corresponding to the lane id, for example, an average quantity of satellites and an average DOP value. The positioning quality of each lane id in the positioning quality indication information may indicate positioning quality of a corresponding lane in the high definition map.

There are mainly the following two manners of generating a lane in the positioning quality indication information.

### Manner 1: Lane topology relationship based-generation

Specifically, if a road indicated by each road ID in the high definition map includes at least one lane, each road ID in the high definition map corresponds to at least one lane ID in the high definition map. Therefore, for a track point corresponding to each road id in the positioning quality indication information, a lane ID that is in the high definition map and that corresponds to each track point may be obtained, a lane in the positioning quality indication information is generated based on a connection relationship between lanes indicated by lane IDs in the high definition map, and represented by a lane id in the positioning quality indication information, and the lane id in the positioning quality indication information corresponds to at least one of a plurality of lane IDs in the high definition map.

In a specific implementation, in the positioning quality indication information, a lane generation manner needs to be consistent with a road generation manner. For example, if the road in the positioning quality indication information is generated in Manner 1 (generated based on the road topology relationship), correspondingly, the lane in the positioning quality indication information also needs to be generated in a manner of a lane topology relationship. For example, if the road a1 generated in the positioning quality indication information corresponds to the road 1 and the road 2 in the high definition map, correspondingly, a lane ID in the high definition map corresponding to a lane id established in the positioning quality indication information should have a correspondence with at least one of the road 1 and the road 2 in the high definition map. In another specific implementation, a method for generating a lane in the positioning quality indication information and a method for generating a road in the positioning quality indication information may be independent of each other. This is not specifically limited in embodiments of this application.

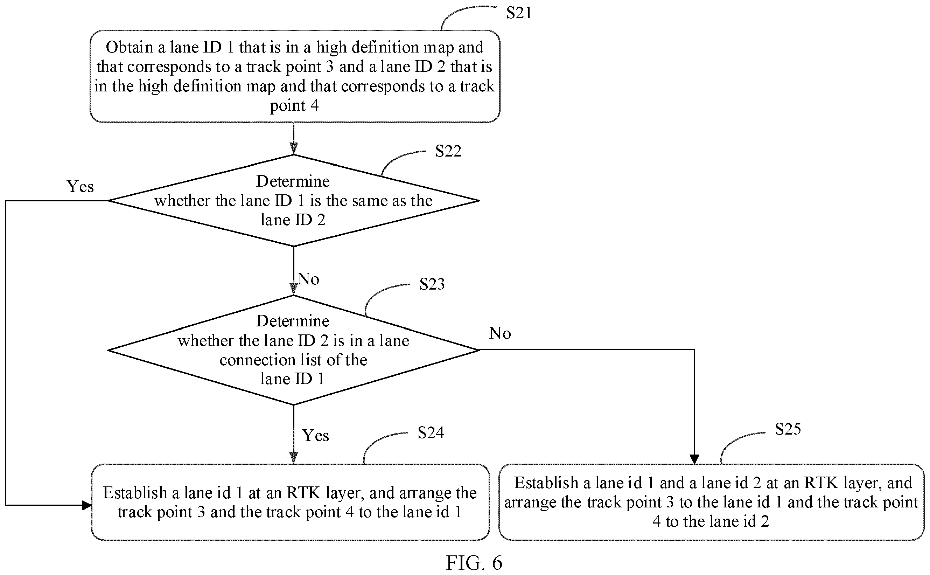

FIG. 6 is a flowchart of a method for generating a lane in positioning quality indication information in Manner 1 according to an embodiment of this application. The method may be performed by the graphics drawing device in FIG. 1. The method includes but is not limited to the following steps.

S21: Obtain a lane ID 1 that is in a high definition map and that corresponds to a track point 3 and a lane ID 2 that is in the high definition map and that corresponds to a track point 4.

The track point 3 and the track point 4 are adjacent track points, and both the track point 3 and the track point 4 correspond to a same road id in positioning quality indication information. In a specific implementation, a lane ID that is in the high definition map and that corresponds to a track point may be determined based on location information of the track point and a coordinate range of a lane in the high definition map.

S22: Determine whether the lane ID 1 is the same as the lane ID 2.

If the lane ID 1 and the lane ID 2 are the same, it indicates that the track point 3 and the track point 4 belong to a same lane in the high definition map, and S2 is performed. If the lane ID 1 and the lane ID 2 are not the same, it indicates that the track point 3 and the track point 4 do not belong to a same lane in the high definition map, and S2 is performed.

S23: Determine whether the lane ID 2 is in a lane connection list of the lane ID 1.

When the lane ID 2 is in the lane connection list of the lane ID 1, it indicates that, in the high definition map, there is a connection relationship between the lane ID 2 on which the track point 4 is located and the lane ID 1 on which the track point 3 is located, and S2 is performed. When the lane ID 2 is not in the lane connection list of the lane ID 1, it indicates that, in the high definition map, there is no connection relationship between the lane ID 2 on which the track point 4 is located and the lane ID 1 on which the track point 3 is located, and S2 is performed.

S24: Establish a lane id 1 in the positioning quality indication information, and arrange the track point 3 and the track point 4 to the lane id 1.

When any one of the following conditions is met, the track point 3 and the track point 4 correspond to a same lane in the positioning quality indication information.

A21: The lane ID 1 and the lane ID 2 are the same.

A22: The lane ID 1 and the lane ID 2 are not the same, but the lane ID 2 is in the lane connection list of the lane ID 1.

It may be understood that, when the foregoing case A21 is met, there is a correspondence between the lane id 1 in the positioning quality indication information and the lane ID 1 (or the lane ID 2) in the high definition map; or when the foregoing case A22 is met, there is a correspondence between the lane id 1 in the positioning quality indication information and the lane ID 1 and the lane ID 2 in the high definition map.

S25: Establish a lane id 1 and a lane id 2 based on the positioning quality indication information, and arrange the track point 3 to the lane id 1 and the track point 4 to the lane id 2.

When the lane ID 1 and the lane ID 2 are not the same and the lane ID 2 is not in the lane connection list of the lane ID 1, the track point 3 and the track point 4 correspond to different lanes in the positioning quality indication information.

It should be noted that, the track point 3 and the track point 4 are adjacent track points, but in the high definition map, there is no connection relationship between a lane on which the track point 3 is located and a lane on which the track point 4 is located. This is because there is a lane between the lane on which the track point 3 is located and the lane on which the track point 2 is located. However, because the lane is relatively short in length, and a vehicle speed of a data collection vehicle is relatively fast, that is, time (which is less than a sampling interval of a track point) for the data collection vehicle to pass the lane is short, the data collection vehicle fails to collect the track point on the lane. Consequently, there is no connection relationship between two lanes that are determined based on adjacent track points, and lane jumping occurs.

It may be understood that, in this manner, there is a correspondence between the lane id 1 in the positioning quality indication information and the lane ID 1 in the high definition map, and there is a correspondence between the lane id 2 in the positioning quality indication information and the lane ID 2 in the high definition map.

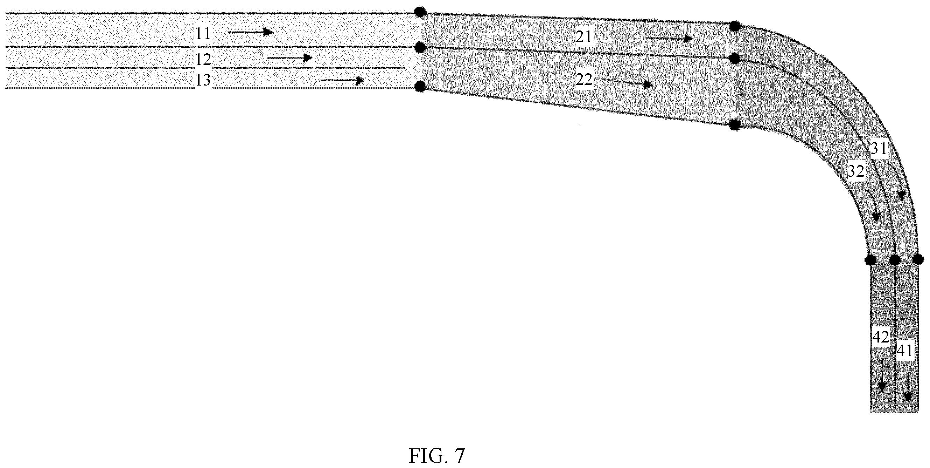

FIG. 7 is a schematic diagram of a lane in a road in a high definition map. FIG. 7 is a refinement for roads in the road connection line 1 in FIG. 5. From left to right, the first light-color region corresponds to the road 1 in FIG. 5, and lane IDs corresponding to the road 1 include a lane 11, a lane 12, and a lane 13; the second light-gray region corresponds to the road 2 in FIG. 5, and lane IDs corresponding to the road 2 include a lane 21 and a lane 22; the third gray region corresponds to the road 3 in FIG. 5, and lane IDs corresponding to the road 3 include a lane 31 and a lane 32; and the fourth dark-gray region corresponds to the road 4 in FIG. 5, and lane IDs corresponding to the road 4 include a lane 41 and a lane 42. It can be learned from FIG. 7 that all lanes in FIG. 7 are downstream vehicles. In FIG. 7, the lane 11 is connected to the lane 21, the lane 12 and the lane 13 are separately connected to the lane 22, the lane 21 is connected to the lane 31, the lane 22 is connected to the lane 32, the lane 31 is connected to the lane 41, and the lane 32 is connected to the lane 42.

It may be understood that track points corresponding to each road are distributed on lanes of the road. For example, track points corresponding to the road 1 are distributed on the lane 11, the lane 12, and the lane 13. If a lane id in the positioning quality indication information is generated based on the method shown in FIG. 6 and FIG. 7, a correspondence between the lane id generated in the positioning quality indication information and a lane ID in the high definition map may be shown in Table 4. In Table 4, lane ids generated in the positioning quality indication information include: l1, l2, l3, l4, and l5, where 11 corresponds to the lane 11 and the lane 21 in the high definition map, l2 corresponds to the lane 12 and the lane 22 in the high definition map, l3 corresponds to the lane 13 and the lane 22 in the high definition map, l4 corresponds to the lane 31 and the lane 41 in the high definition map, and l5 corresponds to the lane 32 and the lane 42 in the high definition map. In some possible embodiments, it can be learned from Table 2 that the road a1 corresponds to the road 1 and the road 2 in the high definition map, and the road a2 corresponds to the road 3 and the road 4 in the high definition map. In this case, correspondences between lane ids "l1", "l2", "l3", "l4", and "l5" and road ids in the positioning quality indication information may be further added to Table 4. As shown in Table 4, the lane 11, the lane l2, and the lane l3 separately correspond to the road a1 in Table 2, and the lane l4 and the lane l5 separately correspond to the road a2 in Table 2. In addition, Table 4 further lists a track point corresponding to each lane id and a mapping relationship between the track point and a lane ID in the high definition map.

**Table 4**

| Road id | Lane id | Lane ID in a high definition map | Track point | Positioning quality |
|---|---|---|---|---|
| a1 | l1 | 11 | ... | |
| | | 21 | ... | |
| | l2 | 12 | ... | |
| | | 22 | ... | |
| | l3 | 13 | ... | |
| | | 22 | ... | |
| a2 | l4 | 31 | ... | |
| | | 41 | ... | |
| | l5 | 32 | ... | |
| | | 42 | ... | |

Refer to Table 4. After the lane id in the positioning quality indication information is generated, positioning quality of the lane id is calculated based on quality information of track points corresponding to the generated lane id in Table 4. It may be understood that the positioning quality corresponding to the lane id indicates positioning quality of a corresponding lane in the high definition map. For example, the positioning quality of the lane id includes one or more of an average quantity of satellites, an average DOP value, average positioning precision, and the like. This is not specifically limited in embodiments of this application. An example in which positioning quality of the lane 11 in Table 4 is calculated. The positioning quality of the lane 11 in the positioning quality indication information may be calculated based on quality information of track points corresponding to the lane 11 and quality information of track points corresponding to the lane 21. It may be understood that the positioning quality corresponding to the lane 11 may be used as positioning quality of the lane 11 in the high definition map, and may also be used as positioning quality of the lane 21 in the high definition map.

In some possible embodiments, a lane in the positioning quality indication information may further be generated based on a fixed length and a length of each lane that is in the high definition map and on which the M track points are located, and the lane in the positioning quality indication information is represented by a lane id, so that lengths of lanes indicated by the lane ids in the positioning quality indication information are as equal as possible. A process of generating the lane in the positioning quality indication information based on a fixed length is similar to the foregoing process of generating the road in the positioning quality indication information based on a fixed length. For brevity of this specification, details are not described herein again. It should be noted that, in the mapping relationship between the lane id in the positioning quality indication information and the lane ID in the high definition map that is established in the manner of generating the lane in the positioning quality indication information based on a fixed length, a case in which a plurality of lane ids in the positioning quality indication information correspond to a same lane ID in the high definition map exists, and a case in which a lane id in the positioning quality indication information corresponds to a plurality of lane IDs in the high definition map exists. This is not specifically limited in embodiments of this application.

### Manner 2: Adaptive lane segmentation using a track point with lowest quality as a center

Specifically, for a track point corresponding to each road id in the positioning quality indication information, a lane ID that is in the high definition map and that corresponds to each track point in track points corresponding to the road id is obtained, and a plurality of lane connection lines are first established based on a connection relationship between lanes indicated by lane IDs in the high definition map. It may be understood that each lane connection line includes lanes indicated by a plurality of lane IDs in the high definition map. Then, quality of each track point is determined based on quality information of a track point corresponding to each lane ID in each lane connection line, and a track point with lowest quality in the lane connection line is determined. The track point with lowest quality is used as a center, and a preset length threshold is separately extended along an upstream direction and a downstream direction of a lane on which the track point with lowest quality is located. A corresponding lane id is generated in the positioning quality indication information based on an extension result, and a correspondence between the lane id and each lane ID in the lane connection line is established. In this way, adaptive segmentation of a lane in the positioning quality indication information that corresponds to each lane ID in the high definition map and that corresponds to the lane connection line is completed.

If lane segmentation in the positioning quality indication information in FIG. 7 is performed in Manner 2, FIG. 7 shows only details of the road connection line 1 (including the road 1, the road 2, the road 3, and the road 4) in FIG. 5. It can be learned that there are three lane connection lines in FIG. 7. A lane connection line 1 includes the lane 11, the lane 21, the lane 31, and the lane 41, a lane connection line 2 includes the lane 12, the lane 22, the lane 32, and the lane 42, and a lane connection line 3 includes the lane 13, the lane 22, the lane 32, and the lane 42. The lane connection line 1 is used as an example. Quality of track points on each road in the lane connection line 1 is determined, and it is determined that a track point with lowest quality is located on the lane 21. The track point with lowest quality is used as a center, and extends to the point 5 along an upstream direction of the lane 21 and extends to the point 6 along a downstream direction of the lane 21. Distances between the point 5 and the track point with lowest quality on the lane 21 and between the point 6 and the track point with lowest quality on the lane 21 are both a preset length threshold. If both the point 5 and the point 6 are located on the lane 21, for each lane in the lane connection line 1 in FIG. 7, three lane ids are generated in the positioning quality indication information. The lane 11 corresponds to one lane id, the lane 21 corresponds to one lane id, and the lane 31 and the lane 41 correspond to a same lane id. In a specific implementation, if the point 5 is located on the lane 11, and the point 6 is located on the lane 31, for each lane in the lane connection line 1 in FIG. 7, two lane ids are generated in the positioning quality indication information. The lane 11, the lane 21, and the lane 31 correspond to a same lane id, and the lane 41 corresponds to one lane id. In some possible implementations, the point 5 may be located on the lane 11 and the point 6 may be located on the lane 21, or the point 5 may be located on the lane 21 and the point 6 may be located on the lane 31. In this case, adaptive lane segmentation is performed based on a corresponding case. This is not specifically limited in embodiments of this application.

The track point with lowest quality in the track points corresponding to the lane may be a track point corresponding to a minimum quantity of satellites in the track points corresponding to the lane, a track point corresponding to a maximum DOP value, or the like. This is not specifically limited in this application. A process of determining a track point with lowest quality on a lane in the high definition map is similar to the foregoing process of determining a track point with lowest quality on a road in the high definition map, and details are not described herein again.

After the lane id in the positioning quality indication information is generated in Manner 2, a mapping table that is shown in Table 4 and that includes a lane id in the positioning quality indication information, a lane ID in the high definition map, and the like may also be obtained. Positioning quality of each lane id may be obtained based on quality information of a track point corresponding to each lane id. For a specific process, refer to the foregoing descriptions. Details are not described herein again.

In some possible embodiments, the lane in the positioning quality indication information may further be generated based on a feature point in the high definition map, and an endpoint of the lane in the positioning quality indication information is the feature point in the high definition map. The feature point in the high definition map includes but is not limited to a road endpoint, a lane endpoint, a ramp endpoint, a tunnel endpoint, a bridge endpoint, a gas station, a toll station, a corner point of a region, a corner point of an intersection, or the like. In a specific implementation, when a lane type indicated by the lane ID in the high definition map that corresponds to the track point is a high-speed type, a high-speed lane may be generated in the positioning quality indication information in the feature point-based lane segmentation manner.

In some possible embodiments, in addition to the method for generating the lane in the positioning quality indication information in Manner 1 or Manner 2, the lane id in the positioning quality indication information may alternatively be generated based on the lane ID in the high definition map corresponding to the track point, so that the lane id in the positioning quality indication information is in a one-to-one correspondence with the lane ID in the high definition map. For example, nine lane IDs in the high definition map are shown in FIG. 7. In this case, nine lane ids are also generated in the positioning quality indication information, and the nine lane ids in the positioning quality indication information are in a one-to-one correspondence with the nine lane IDs in the high definition map shown in FIG. 7. In this case, positioning quality corresponding to each lane id indicates only positioning quality of a corresponding lane in the high definition map.

In conclusion, it can be learned that, when a lane in the positioning quality indication information is generated, in addition to location information and quality information of a track point, if the lane in the positioning quality indication information is generated in a topology relationship of the lane in the high definition map, location information of a lane and an intersection in the high definition map further needs to be combined; or if the lane in the positioning quality indication information is generated in a fixed length manner or in a adaptive manner in which a track point with lowest quality is used as a center, only location information of the lane in the high definition map may be used; or if the lane in the positioning quality indication information is generated in a manner of a feature point in the high definition map, location information of map elements such as a road, an intersection, a gas station, a toll station, and a bridge in the high definition map needs to be used. In some possible embodiments, the lane in the positioning quality indication information may further be generated based on another possible combination manner of a region, a road, a lane, an intersection, a toll station, a ramp, a tunnel, a bridge, and the like in the high definition map. This is not specifically limited in embodiments of this application.

It can be learned that, based on location information of the lane in the high definition map and related information (for example, the location information and the quality information) of the track point, a lane id in the positioning quality indication information is generated, and positioning quality of the lane id is obtained through statistics, so that positioning quality of a corresponding lane in the high definition map can be learned of based on the lane in the positioning quality indication information. This enriches layer information of the high definition map, helps a vehicle effectively avoid a lane with poor positioning quality in a driving process based on the positioning quality indication information and the high definition map, and improves positioning quality and a travel safety rate of the autonomous driving vehicle.

It should be noted that the region, the road, and the lane in the positioning quality indication information are generated based on a space dimension. In some possible embodiments, when the vehicle performs RTK positioning, positioning quality of the vehicle is affected by a surrounding environment. For example, positioning quality of the vehicle surrounded by trees with sparse leaves is better than positioning quality of the vehicle surrounded by trees with lush leaves. However, the surrounding environment varies with time. Therefore, based on the space dimension, the positioning quality indication information may further be generated in combination of a time dimension. Specifically, time information may be set in the positioning quality indication information, and the time information in the positioning quality indication information indicates a valid time of positioning quality of a corresponding region, road, or lane in the high definition map.

In a specific implementation, one year may be divided into four time periods according to a change of trees in four seasons of one year, which are respectively: January to March, April to June, July to September, and October to December. In other words, one quarter corresponds to one time period. Then, based on a track point collected in each time period and a high definition map, positioning quality indication information corresponding to the time period is generated. For a method for generating a region, a road, and a lane in the positioning quality indication information corresponding to the time period, refer to the foregoing related descriptions. For brevity of this specification, details are not described herein again. For example, it is assumed that positioning quality indication information 1 is generated based on a high definition map and track points collected in a time period from January to March, and the positioning quality indication information 1 carries time information indicating January to March. In this case, the positioning quality indication information 1 indicates positioning quality of one or more of a region, a road, and a lane in the high definition map in the time period from January to March.

In another specific implementation, time period division may alternatively be performed based on a change period of a region tree, and then based on a high definition map and related information (for example, location information and quality information) of a track point collected in each time period, positioning quality indication information corresponding to the time period is generated. For a method for generating a region, a road, and a lane in the positioning quality indication information corresponding to the time period, refer to the foregoing related descriptions. For brevity of this specification, and is not described herein again.

For example, using a tree change period in the north as an example, one year is divided into two time periods, that is, April to October and November to March. Most trees in the north of April to October have lush leaves, and most trees in the north of November to March have sparse leaves. It is assumed that positioning quality indication information 2 is generated based on a high definition map and track points collected from April to October, and positioning quality indication information 3 is generated based on the high definition map and track points collected from November to March. When a road in the positioning quality indication information is used as an example, it is easy to learn that average positioning quality of the road in the high definition map that is indicated by the positioning quality indication information 2 is better than average positioning quality of the road in the high definition map that is indicated by the positioning quality indication information 3.

It can be learned that the time dimension is introduced in a process of generating the positioning quality indication information, and impact of the surrounding environment on vehicle positioning is fully considered, so that the positioning quality indication information can provide, in a time scale, more accurate information that indicates positioning quality of the high definition map for the autonomous driving vehicle.

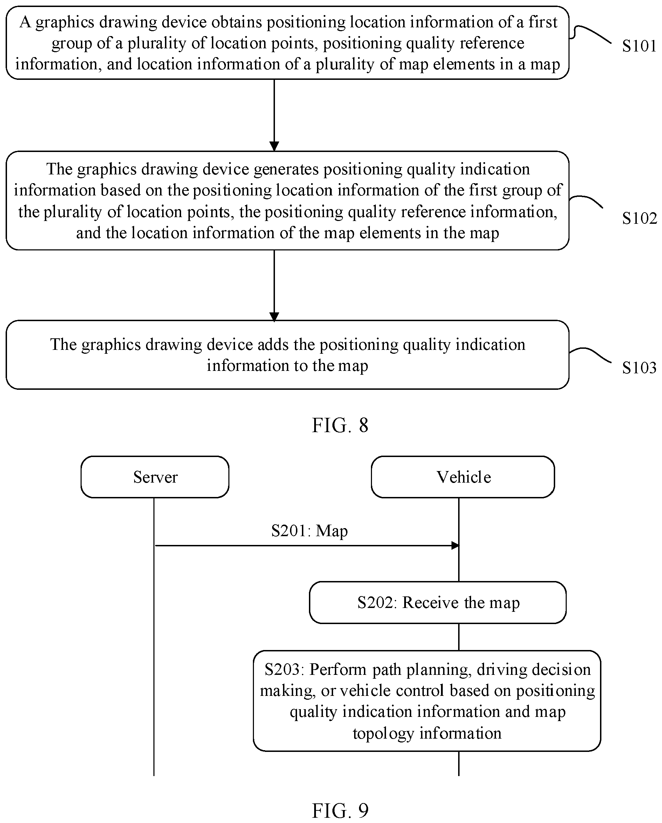

FIG. 8 shows a map generation method according to an embodiment of this application, to provide a proper and reliable statistical value of positioning quality for a region, a road, or a lane in a map. The method includes but is not limited to the following steps.

S101: A graphics drawing device obtains positioning location information of a first group of a plurality of location points, positioning quality reference information, and location information of a plurality of map elements in a map.

The map may be a high definition map, or another type of map including a region, a road, and a lane. This is not specifically limited in embodiments of this application. In a specific implementation, the map may be pre-stored in a memory of the graphics drawing device, and the graphics drawing device obtains the location information of the map element in the map by invoking the map in the memory of the graphics drawing device. In another specific implementation, the map may alternatively be obtained by the graphics drawing device from another device (for example, a vehicle or a cloud server).

The first group of the plurality of location points may also be understood as a location point set, and each location point in the location point set has corresponding positioning location information and positioning quality reference information. It should be noted that the first group of the plurality of location points may be a group of location points collected by at least one data collection vehicle. It should be noted that the first group of the plurality of location points are equivalent to the M track points in the foregoing embodiments, and each of the first group of the plurality of location points may be arranged based on a collection time sequence, or may be disordered. This is not specifically limited in embodiments of this application. In addition, the positioning location information of the location point is the location information of the track point, and the positioning quality reference information of the location point is the quality information of the track point.

The positioning location information of the location point indicates a location of the location point in the high definition map. For example, the positioning location information of the location point may be represented by a longitude, a latitude, and the like. The positioning quality reference information of the location point may be used to measure positioning quality of the location point. The positioning quality reference information of the location point includes positioning precision of the location point, a DOP value of the location point, a quantity of satellites observed at the location point, or information indicating whether the positioning location information of the location point is a fixed solution.

For example, the positioning precision of the location point may be represented based on offsets of the location point relative to truth values in three directions: east, north, and vertical. The DOP value of the location point is used to measure an error amount caused by a geometric location of the satellite relative to an observer (for example, a data collection vehicle that collects the location point). The fixed solution means that an ambiguity corresponding to a case in which the positioning location information of the location point is obtained through calculation based on a carrier phase is an integer, and positioning quality corresponding to the fixed solution is better than positioning quality corresponding to a non-fixed solution.

The map element includes at least one of a region, a road, a lane, an intersection, a toll station, a ramp, a tunnel, and a bridge in the map. It should be noted that each road includes a plurality of lanes, each region includes a plurality of roads, and the road and the lane may be located at an intersection, or may not be located at an intersection.

S 102: The graphics drawing device generates positioning quality indication information based on the positioning location information of the first group of the plurality of location points, the positioning quality reference information, and the location information of the map elements in the map.

In this embodiment of this application, the graphics drawing device generates the positioning quality indication information based on the positioning quality information of the first group of the plurality of location points, the positioning quality reference information, and the location information of the map elements in the map. The positioning quality indication information indicates positioning quality in a target geographic range, the first group of the plurality of location points include a second group of a plurality of location points in the target geographic range, and the positioning quality in the target geographic range is a statistical value obtained based on positioning quality reference information of the second group of the plurality of location points.

The target geographic range is a region in the positioning quality indication information, a road in the positioning quality indication information, or a lane in the positioning quality indication information. It should be noted that the region, the road, or the lane in the positioning quality indication information may be an existing region, road, or lane in the map, or may be a region, a road, or a lane that is regenerated according to different segmentation rules. The target geographic range provides a proper range for positioning quality estimation. For example, the target geographic range is equivalent to a region indicated by the region id in the positioning quality indication information, a road indicated by the road id in the positioning quality indication information, or a lane indicated by the lane id in the positioning quality indication information in the foregoing embodiments.

Specifically, the target geographic range and the second group of the plurality of location points are determined based on the positioning location information of the first group of the plurality of location points and the location information of the map elements in the map; the statistical value is obtained based on the positioning quality reference information of the second group of the plurality of location points; and the positioning quality indication information is generated based on the target geographic range and the statistical value. For details of this embodiment, refer to related descriptions about generation of the region, the road, and the lane in the positioning quality indication information in the foregoing embodiments.

For example, the determined target geographic range and the second group of the plurality of location points are described based on Table 2. In Table 2, if the target geographic range is the road a1, the second group of the plurality of location points include a track point corresponding to the road 1 in the high definition map and a track point corresponding to the road 2 in the high definition map. In this case, the second group of the plurality of location points may be referred to as track points corresponding to the road a1.

For another example, the determined target geographic range and the second group of the plurality of location points are described based on Table 4. In Table 4, if the target geographic range is the lane 11, the second group of the plurality of location points include a track point corresponding to the lane 11 in the high definition map and a track point corresponding to the lane 21 in the high definition map. In this case, the second group of the plurality of location points may be referred to as track points corresponding to the lane l1.

In a specific implementation, when the target geographic range is a road in the positioning quality indication information, the road in the positioning quality indication information includes a plurality of roads in the map, or the road in the map includes a plurality of roads in the positioning quality indication information.

In a specific implementation, when the target geographic range is a lane in the positioning quality indication information, the lane in the positioning quality indication information includes a plurality of lanes in the map, or the lane in the map includes a plurality of lanes in the positioning quality indication information.

In a specific implementation, when the target geographic range is a road in the positioning quality indication information, the road in the positioning quality indication information may have a fixed length. It should be noted that, in this embodiment, the road is equivalent to the road generated in the positioning quality indication information in the foregoing fixed length manner. Alternatively, when the target geographic range is a lane in the positioning quality indication information, the lane in the positioning quality indication information may have a fixed length. It should be noted that, in this embodiment, the lane is equivalent to the lane generated in the positioning quality indication information in the foregoing fixed length manner.

In a specific implementation, when the target geographic range is a road in the positioning quality indication information, an endpoint of the road in the positioning quality indication information is a map element, an endpoint of the map element, or a corner point of the map element; or the target geographic range is a lane in the positioning quality indication information, and an endpoint of the lane in the positioning quality indication information is a map element, an endpoint of the map element, or a corner point of the map element. For details of this embodiment, refer to related descriptions of generating the road or the lane in the positioning quality indication information based on the feature point in the high definition map in the foregoing embodiments. Details are not described herein again.

For example, when the map element is a gas station or a toll station, an endpoint of a road (or a lane) in the positioning quality indication information is a gas station or a toll station; when the map element is a map element represented by coordinates of two endpoints, such as a road, a lane, a ramp, a tunnel, or a bridge, an endpoint of a road (or a lane) in the positioning quality indication information is an endpoint of the map element; or when the map element is a map element represented by coordinates of a plurality of (more than two) corner points, such as a region or an intersection, an endpoint of a road (or a lane) in the positioning quality indication information is a corner point of the map element.

In a specific implementation, the target geographic range is a road in the positioning quality indication information, and a midpoint of the road in the positioning quality indication information is a location point with worst positioning quality in the second group of the plurality of location points; or the target geographic range is a lane in the positioning quality indication information, and a midpoint of the lane in the positioning quality indication information is a location point with worst positioning quality in the second group of the plurality of location points. For details of this embodiment, refer to related descriptions of generating the road or the lane in the positioning quality indication information based on the feature point in the high definition map in the foregoing embodiments. Details are not described herein again. It should be noted that the location point with worst positioning quality is equivalent to the track point with lowest quality in the foregoing embodiments.

In a specific implementation, the positioning quality indication information further indicates a correspondence between the target geographic range and a road in the map, a correspondence between the target geographic range and a lane in the map, or a correspondence between the target geographic range and a region in the map. In this way, when a region, a road, or a lane that is in the map and in which a vehicle is located is known, positioning quality of the region, the road, or the lane that is in the map and in which the vehicle is located can be quickly obtained based on a mapping relationship that is between the target geographic range and the region, the road, or the lane in the map and that is in the positioning quality indication information.

In a specific implementation, the positioning quality indication information includes time information, and the time information indicates a valid time of positioning quality in the target geographic range of the positioning quality indication information. For details of this embodiment, refer to the foregoing related descriptions of generating the positioning quality indication information based on a time dimension. Details are not described herein again.

S 103: The graphics drawing device adds the positioning quality indication information to the map.

In this embodiment of this application, after generating the positioning quality indication information, the graphics drawing device may further add the positioning quality indication information to the map, so that the map intuitively and clearly displays a statistical value of positioning quality of any region, any road, or any lane in the map. In other words, the positioning quality indication information is equivalent to being embedded in the map.

In some possible embodiments, the positioning quality indication information and the map may alternatively be separately stored. When the positioning quality indication information needs to be used, and when a map element (which may be referred to as a target map element) in the map in which a terminal is located is known, positioning quality of a target map range corresponding to the target map element in the positioning quality indication information is searched for based on a correspondence between the target geographic range in the positioning quality indication information and the map element in the map.

Usually, the positioning quality indication information may be generated by a map server. In this case, the graphics drawing device may be a map server, or may be a component or a chip in the map server. In addition, the positioning quality indication information may alternatively be generated by a roadside device, a vehicle, or a mobile terminal. In this case, the graphics drawing device may be the roadside device, the vehicle, or the mobile terminal, or a component or a chip of the roadside device, the vehicle, or the mobile terminal.

It can be learned that, according to this embodiment of this application, positioning quality (for example, an average quantity of satellites and average positioning precision) is collected in a target geographic range to generate positioning quality indication information, thereby providing relatively accurate prior information of positioning quality. In addition, based on a correspondence between the target geographic range and a region, a road, or a lane in the map, a statistical value of reliable positioning quality with reference significance can be provided for the region, the road, or the lane in the map, so that a vehicle or a portable terminal that uses the map can selectively use positioning information in the map, thereby improving safety of autonomous driving.

FIG. 9 is a flowchart of a map using method according to an embodiment of this application. FIG. 9 may be independent of the embodiment in FIG. 8, or may be a supplement to the embodiment in FIG. 8. In FIG. 9, a server may be used as an example of the graphics drawing device, and a vehicle may be used as an example of the terminal for description. However, in embodiments of this application, the graphics drawing device is not limited to the server, and the terminal is not limited to the vehicle. The method includes but is not limited to the following steps.

S201: The server sends a map to the outside.

In this embodiment of this application, the server sends the map to the outside. The map includes positioning quality indication information and map topology information, the positioning quality indication information indicates a statistical value of positioning quality in a target geographic range, and the map topology information indicates a location of a map element in the high definition map.

The map element includes at least one of a region, a road, a lane, an intersection, a toll station, a ramp, a tunnel, and a bridge in the high definition map; and the target geographic range is a region, a road, or a lane in the positioning quality indication information.

In a specific implementation, when the target geographic range is a road in the positioning quality indication information, the road in the positioning quality indication information includes a plurality of roads in the high definition map, or the road in the high definition map includes a plurality of roads in the positioning quality indication information; or when the target geographic range is a lane in the positioning quality indication information, the lane in the positioning quality indication information includes a plurality of lanes in the high definition map, or the lane in the high definition map includes a plurality of lanes in the positioning quality indication information. It can be learned that a mapping relationship between the roads in the positioning quality indication information and the roads in the high definition map may be a one-to-many relationship or may be a many-to-one relationship, and a mapping relationship between the lanes in the positioning quality indication information and the lanes in the high definition map may be a one-to-many relationship or may be a many-to-one relationship. This is not specifically limited in embodiments of this application.

In a specific implementation, the road or the lane in the positioning quality indication information may have a fixed length. For this embodiment, refer to related descriptions of generating the road or the lane in the positioning quality indication information based on the fixed length in the foregoing embodiments. Details are not described herein again.

In a specific implementation, when the target geographic range is a road in the positioning quality indication information, an endpoint of the road in the positioning quality indication information is the map element, an endpoint of the map element, or a corner point of the map element; or when the target geographic range is a lane in the positioning quality indication information, an endpoint of the lane in the positioning quality indication information is the map element, an endpoint of the map element, or a corner point of the map element. For this embodiment, refer to related descriptions in S 102. Details are not described herein again.

In a specific implementation, the target geographic range is a road in the positioning quality indication information, the road in the positioning quality indication information includes a third group of a plurality of location points, and a midpoint of the road in the positioning quality indication information is a location point with worst positioning quality in the third group of the plurality of location points; or the target geographic range is a lane in the positioning quality indication information, the lane in the positioning quality indication information includes a fourth group of a plurality of location points, and a midpoint of the lane in the positioning quality indication information is a location point with worst positioning quality in the fourth group of the plurality of location points. For this embodiment, refer to the foregoing related descriptions of generating the road or the lane in the positioning quality indication information in the adaptive manner. Details are not described herein again.

In a specific implementation, the positioning quality indication information further indicates a correspondence between the target geographic range and a road in the high definition map, or indicates a correspondence between the target geographic range and a lane in the high definition map, or indicates a correspondence between the target geographic range and a region in the high definition map.

In a specific implementation, the positioning quality indication information further includes time information, and the time information indicates a valid time of positioning quality in the target geographic range.

In a specific implementation, the positioning quality indication information includes average positioning precision of a plurality of location points, an average precision factor DOP value of the plurality of location points, an average quantity of satellites observed at the plurality of location points, or a statistics status indicating whether positioning locations of the plurality of location points are fixed solutions.

It should be noted that, that the server sends a map to a vehicle may be the following: The server directly sends the map to the vehicle, or the server sends the map to a roadside unit, and then the roadside unit sends the map to the vehicle in a broadcast or multicast manner, so that the vehicle guides driving decision making of the vehicle according to the map, to avoid a region, a road, or a lane with relatively poor positioning quality in the high definition map.

S202: The vehicle receives the map.

In this embodiment of this application, the vehicle receives the map. For descriptions of the map, refer to related descriptions in S201. Details are not described herein again.

In a specific implementation, the vehicle receives the map from the server. For example, the vehicle sends a map request to the server, and the server sends a map to the vehicle in response to the map request.

In another specific implementation, the vehicle receives a map sent by a roadside unit or another vehicle. For example, the server sends a map to a roadside unit, and after receiving the map, the roadside unit sends the map to the vehicle in a broadcast, multicast, or unicast manner. For another example, another vehicle on a road surface has obtained a map, and the another vehicle may share the map with the vehicle.

S203: The vehicle performs path planning, driving decision making, or vehicle control based on the positioning quality indication information and the map topology information.

In this embodiment of this application, after receiving the map, the vehicle may obtain the positioning quality indication information and the map topology information from the map, and the vehicle performs path planning, driving decision making, or vehicle control based on the positioning quality indication information and the map topology information, to avoid a region, a road, or a lane with relatively poor positioning quality.

Refer to FIG. 1. In the application scenario shown in FIG. 1, it is assumed that a vehicle intends to arrive at the destination F from the point A. Before map information is received, a navigation route planned by the vehicle based on the high definition map is A-B-C-D, and the route is the shortest and takes shortest time to pass through. However, if the vehicle receives the map information at the point A, the vehicle may learn, from the positioning quality indication information, that positioning quality of a road BC is relatively poor, and positioning quality of a road AB, a road BE, a road EF, a road FC, and a road CD is good. Therefore, a navigation route planned by the vehicle based on the positioning quality indication information and the map topology information is A-B-E-F-C-D, so that the road BC with relatively poor positioning quality is avoided.

It should be noted that, in addition to a scenario shown in FIG. 9 in which the vehicle is assisted in avoiding a road with poor positioning quality in the high definition map in a timely manner based on the received map, the application scenario may alternatively be a scenario in which the vehicle is assisted in avoiding a lane or a region with poor positioning quality in the high definition map in a timely manner based on map information including the positioning quality indication information.

In some possible embodiments, the vehicle may store the received map, and then invoke the map at any time when the map is used subsequently. Alternatively, the received map may be displayed on a display screen, so that a user can intuitively and clearly learn positioning quality in each target geographic range in the map.

In this embodiment, the map using apparatus may be a vehicle, or may be a component (for example, a navigation apparatus or an autonomous driving apparatus in the vehicle) in the vehicle, or may be a chip that can be used in the vehicle.

It can be learned that, in this embodiment of this application, the map including the positioning quality indication information and the map topology information is generated, to provide a statistical value of reliable positioning quality with reference value for a region, a road, or a lane in the high definition map, so that a vehicle receiving the map can learn positioning quality of any region, road, or lane in the high definition map in advance, and can independently choose to avoid a region, a road, or a lane with relatively poor positioning quality, or selectively set a relatively low confidence level for positioning information with relatively poor positioning quality. This improves driving decision making accuracy and a travel safety rate of the vehicle.

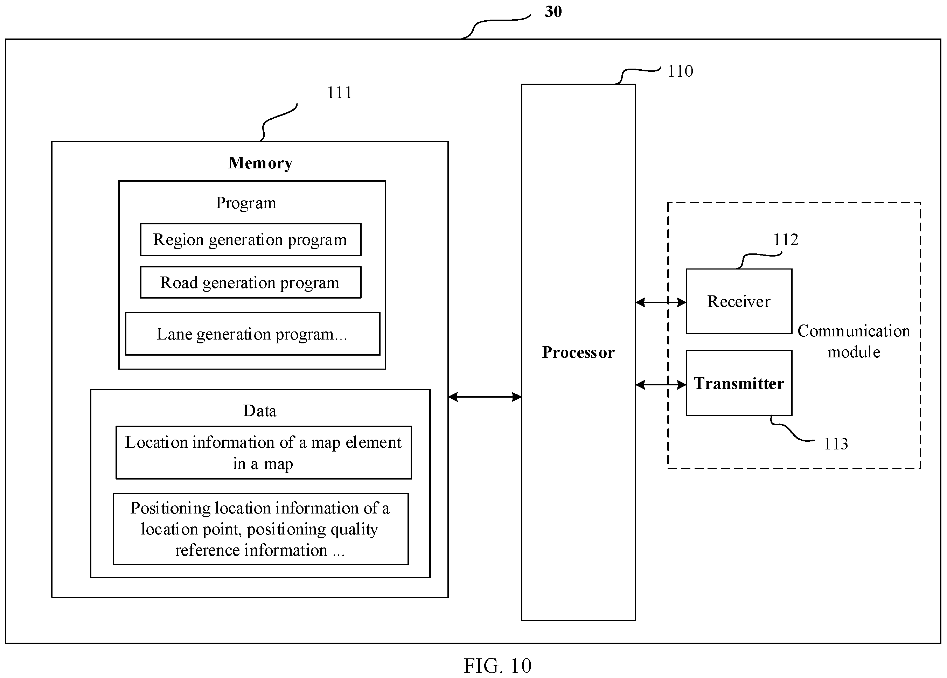

FIG. 10 is a schematic diagram of a structure of a map generation apparatus according to an embodiment of this application. The apparatus 30 includes at least a processor 110, a memory 111, a receiver 112, and a transmitter 113. The receiver 112 and the transmitter 113 may alternatively be replaced with communication interfaces, configured to provide information input and/or output for the processor 110. Optionally, the memory 111, the receiver 112, the transmitter 113, and the processor 110 are coupled or connected through a bus. The apparatus 30 may be the graphics drawing device in FIG. 2 or FIG. 8, or may be the server in FIG. 9.

The receiver 112 is configured to obtain positioning location information and positioning quality reference information of a first group of a plurality of track points. In some possible embodiments, the receiver 112 is further configured to obtain location information, sent by another device, of a map element in a map. For example, the receiver 112 may be configured to perform S101 in FIG. 8. The transmitter 113 is configured to send map information to a terminal that can be communicated, where the map information includes positioning quality indication information and map topology information. For example, the transmitter 113 may be configured to perform S201 in FIG. 9. The receiver 112 and the transmitter 113 may include an antenna and a chip set that are configured to communicate with a device, a sensor, or another entity device in a vehicle directly or through an air interface. The transmitter 113 and the receiver 112 form a communication module. The communication module may be configured to receive and send information based on one or more other types of wireless communication (for example, protocols), and the wireless communication is, for example, Bluetooth, IEEE 802.11 communications protocols, a cellular technology, worldwide interoperability for microwave access (worldwide interoperability for microwave access, WiMAX) or LTE (Long Term Evolution, long term evolution), a ZigBee protocol, dedicated short range communications (Dedicated Short Range Communications, DSRC), RFID (Radio Frequency Identification, radio frequency identification) communications, and the like.

The processor 110 is configured to generate positioning quality indication information and map information. For example, the processor 110 may be configured to perform S102 and S103 in FIG. 8. The processor 110 may include one or more general processors, for example, a central processing unit (Central Processing Unit, CPU), or a combination of a CPU and a hardware chip. The foregoing hardware chip may be an application-specific integrated circuit (Application-Specific Integrated Circuit, ASIC), a programmable logic device (Programmable Logic Device, PLD), or a combination thereof. The foregoing PLD may be a complex programmable logic device (Complex Programmable Logic Device, CPLD), a field-programmable gate array (Field-Programmable Gate Array, FPGA), a generic array logic (Generic Array Logic, GAL), or any combination thereof.

The memory 111 may include a volatile memory (Volatile Memory), for example, a random access memory (Random Access Memory, RAM). Alternatively, the memory 111 may include a non-volatile memory (Non-Volatile Memory), for example, a read-only memory (Read-Only Memory, ROM), a flash memory (Flash Memory), a hard disk drive (Hard Disk Drive, HDD), or a solid-state drive (Solid-State Drive, SSD). The memory 111 may alternatively include a combination of the foregoing types. The memory 111 may store a program and data. The stored program includes: a region generation program, a road generation program, a lane generation program, and the like. The stored data includes: location information of a map element in a map, location information of a location point, positioning quality reference system information of a location point, positioning quality indication information, a map, and the like. The memory 111 may exist independently, or may be integrated into the processor 110.

In addition, FIG. 10 is merely an example of an apparatus 30. The apparatus 30 may include more or fewer components than those shown in FIG. 10, or may have different component configuration manners. In addition, the various components shown in FIG. 10 may be implemented by hardware, software, or a combination of hardware and software.

In this embodiment of this application, the apparatus 30 is configured to implement the methods shown in the embodiments in FIG. 4, FIG. 6, and FIG. 8 and the method on the server side described in the embodiment in FIG. 9.

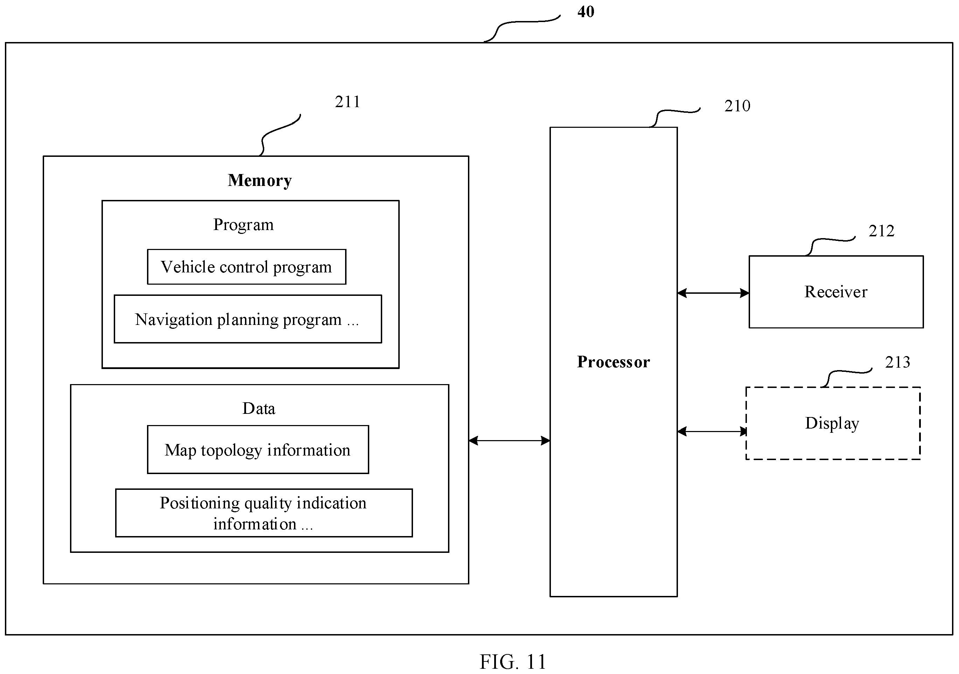

FIG. 11 is a schematic diagram of a structure of a map using apparatus according to an embodiment of this application. The apparatus 40 includes at least a processor 210, a memory 211, and a receiver 212. The receiver 212 may provide information input for the processor 210. Optionally, the memory 211, the receiver 212, and the processor 210 are coupled or connected through a bus. The apparatus 30 may be the terminal in FIG. 2, or may be the vehicle in the embodiment in FIG. 9. In this embodiment of this application, the apparatus 40 is configured to implement the method on a vehicle side described in the embodiment in FIG. 9.

The receiver 212 is configured to receive a map, where the map includes positioning quality indication information and map topology information. The receiver 112 may include an antenna and a chip set that are configured to communicate with a device, a sensor, or another entity device in a vehicle directly or through an air interface. The receiver 212 may be a wireless interface, for example, a cellular network interface or a wireless local area network interface.

The processor 210 is configured to perform path planning, driving decision making, or vehicle control based on the positioning quality indication information and the map topology information. For example, the processor 210 may be configured to perform S203 in FIG. 9. The processor 210 may include one or more general processors, for example, a central processing unit (Central Processing Unit, CPU), or a combination of a CPU and a hardware chip. The foregoing hardware chip may be an application-specific integrated circuit (Application-Specific Integrated Circuit, ASIC), a programmable logic device (Programmable Logic Device, PLD), or a combination thereof. The foregoing PLD may be a complex programmable logic device (Complex Programmable Logic Device, CPLD), a field-programmable gate array (Field-Programmable Gate Array, FPGA), a generic array logic (Generic Array Logic, GAL), or any combination thereof.

The memory 211 may include a volatile memory (Volatile Memory), for example, a random access memory (Random Access Memory, RAM). Alternatively, the memory 211 may include a non-volatile memory (Non-Volatile Memory), for example, a read-only memory (Read-Only Memory, ROM), a flash memory (Flash Memory), a hard disk drive (Hard Disk Drive, HDD), or a solid-state drive (Solid-State Drive, SSD). The memory 211 may alternatively include a combination of the foregoing types. The memory 211 may store a program and data. The stored program includes a vehicle control program, a navigation planning program, and the like. The stored data includes map topology information, positioning quality indication information, and the like. The memory 211 may exist independently, or may be integrated into the processor 110.

In some possible embodiments, the apparatus 40 further includes a display 213. The display 213 and the processor 210 are coupled or connected through a bus. The display 213 is configured to display the map. The display 213 may be a display screen, and the display screen may be a liquid crystal display (Liquid Crystal Display, LCD), an organic or inorganic light-emitting diode (Organic Light-Emitting Diode, OLED), an active-matrix organic light-emitting diode (Active-Matrix Organic Light-Emitting Diode, AMOLED) panel, or the like.

In addition, FIG. 11 is merely an example of an apparatus 40. The apparatus 40 may include more or fewer components than those shown in FIG. 11, or may have different component configuration manners. In addition, the various components shown in FIG. 11 may be implemented by hardware, software, or a combination of hardware and software.

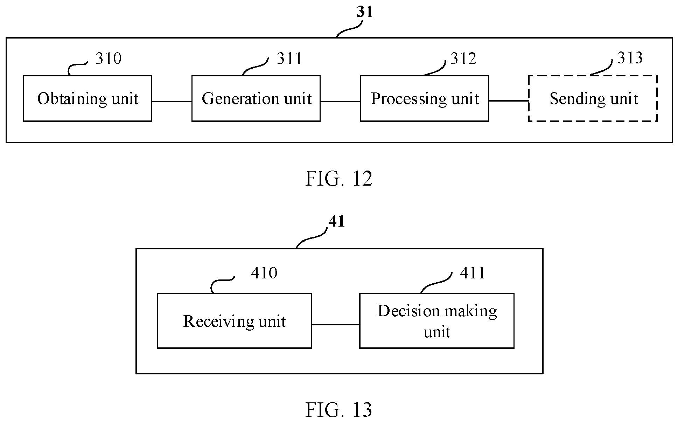

Refer to FIG. 12. FIG. 12 is a schematic diagram of a functional structure of a map generation apparatus according to an embodiment of this application. The apparatus 31 includes an obtaining unit 310, a generation unit 311, and a processing unit 312. The apparatus 31 may be implemented by hardware, software, or a combination of software and hardware.

The obtaining unit 310 is configured to obtain positioning location information of a first group of a plurality of location points, positioning quality reference information of the first group of the plurality of location points, and location information of a map element in a map. The generation unit 311 is configured to generate positioning quality indication information based on the positioning location information of the first group of the plurality of location points, the positioning quality reference information of the first group of the plurality of location points, and the location information of the map element in the map, where the positioning quality indication information indicates positioning quality in a target geographic range, the first group of the plurality of location points include a second group of a plurality of location points in the target geographic range, and the positioning quality in the target geographic range is a statistical value obtained based on positioning quality reference information of the second group of the plurality of location points. The processing unit 312 is configured to add the positioning quality indication information to the map.

Functional modules of the apparatus 31 may be configured to implement the method described in the embodiment in FIG. 8. In the embodiment in FIG. 8, the obtaining unit 310 may be configured to perform S101, the generation unit 311 may be configured to perform S102, and the processing unit 312 may be configured to perform S103.

Optionally, the apparatus 31 further includes a sending unit 313, configured to send map information. The sending unit 313 may be configured to execute S201 to in FIG. 9.

Refer to FIG. 13. FIG. 13 is a schematic diagram of a functional structure of a map using apparatus according to an embodiment of this application. The apparatus 41 includes a receiving unit 410 and a decision making unit 411. The apparatus 41 may be implemented by hardware, software, or a combination of software and hardware.

The receiving unit 410 is configured to receive map information. The map information includes positioning quality indication information and map topology information, the positioning quality indication information indicates a statistical value of positioning quality in a target geographic range, the map topology information indicates a location of a map element in a map, the map element includes at least one of a region, a road, a lane, an intersection, a toll station, a ramp, a tunnel, and a bridge in the map, and the target geographic range is a region, a road, or a lane in the positioning quality indication information. The decision making unit 411 is configured to perform path planning, driving decision making, or vehicle control based on the positioning quality indication information and the map topology information.

Functional modules of the apparatus 41 may be configured to implement the method described in the embodiment in FIG. 9. In the embodiment in FIG. 9, the receiving unit 410 may be configured to perform S202, and the decision making unit 411 may be configured to perform S203.

In the foregoing embodiments in this specification, the descriptions of each embodiment have respective focuses. For a part that is not described in detail in an embodiment, refer to related descriptions in another embodiment.

It should be noted that, a person of ordinary skill in the art may understand that, all or a part of the steps in each method of the foregoing embodiments may be implemented by a program instructing related hardware. The program may be stored in a computer-readable storage medium. The storage medium includes a read-only memory (Read-Only Memory, ROM), a random access memory (Random Access Memory, RAM), a programmable read-only memory (Programmable Read-only Memory, PROM), an erasable programmable read-only memory (Erasable Programmable Read-Only Memory, EPROM), a one-time programmable read-only memory (One-time Programmable Read-Only Memory, OTPROM), an electrically-erasable programmable read-only memory, (Electrically-Erasable Programmable Read-Only Memory, EEPROM), a compact disc read-only memory (Compact Disc Read-Only Memory, CD-ROM), or another optical disk memory, magnetic disk memory, magnetic tape memory, or any other computer-readable medium that can be configured to carry or store data.

The technical solutions of this application essentially, or the part contributing to the conventional technology, or all or some of the technical solutions may be implemented in a form of a software product. The computer software product is stored in a storage medium and includes several instructions for instructing a device (which may be a personal computer, a server, or a network device, a robot, a single-chip microcomputer, a chip, a robot, or the like) to perform all or some of the steps of the methods described in embodiments of this application.

## Claims

1. A map generation method, wherein the method comprises:
obtaining positioning location information of a first group of a plurality of location points, positioning quality reference information of the first group of the plurality of location points, and location information of a map element in a map;
generating positioning quality indication information based on the positioning location information of the first group of the plurality of location points, the positioning quality reference information of the first group of the plurality of location points, and the location information of the map element in the map, wherein the positioning quality indication information indicates positioning quality in a target geographic range, the first group of the plurality of location points comprise a second group of a plurality of location points in the target geographic range, and the positioning quality in the target geographic range is a statistical value obtained based on positioning quality reference information of the second group of the plurality of location points; and
adding the positioning quality indication information to the map.

2. The method according to claim 1, wherein the target geographic range is a region, a road, or a lane in the positioning quality indication information.

3. The method according to claim 2, wherein the map element comprises at least one of a region, a road, a lane, an intersection, a toll station, a ramp, a tunnel, and a bridge in the map.

4. The method according to claim 2 or 3, wherein
the target geographic range is a road in the positioning quality indication information, and the road in the positioning quality indication information comprises a plurality of roads in the map, or the road in the map comprises a plurality of roads in the positioning quality indication information; or
the target geographic range is a lane in the positioning quality indication information, and the lane in the positioning quality indication information comprises a plurality of lanes in the map, or the lane in the map comprises a plurality of lanes in the positioning quality indication information.

5. The method according to claim 2 or 3, wherein
the target geographic range is a road in the positioning quality indication information, and the road in the positioning quality indication information has a fixed length; or
the target geographic range is a lane in the positioning quality indication information, and the lane in the positioning quality indication information has a fixed length.

6. The method according to claim 2 or 3, wherein
the target geographic range is a road in the positioning quality indication information, and an endpoint of the road in the positioning quality indication information is the map element, an endpoint of the map element, or a corner point of the map element; or
the target geographic range is a lane in the positioning quality indication information, and an endpoint of the lane in the positioning quality indication information is the map element, an endpoint of the map element, or a corner point of the map element.

7. The method according to claim 2 or 3, wherein
the target geographic range is a road in the positioning quality indication information, and a midpoint of the road in the positioning quality indication information is a location point with worst positioning quality in the second group of the plurality of location points; or
the target geographic range is a lane in the positioning quality indication information, and a midpoint of the lane in the positioning quality indication information is a location point with worst positioning quality in the second group of the plurality of location points.

8. The method according to any one of claims 1 to 7, wherein the generating positioning quality indication information based on the positioning location information of the first group of the plurality of location points, the positioning quality reference information of the first group of the plurality of location points, and the location information of the map element in the map comprises:
determining the target geographic range and the second group of the plurality of location points based on the positioning location information of the first group of the plurality of location points and the location information of the map element in the map;
obtaining the statistical value based on the positioning quality reference information of the second group of the plurality of location points; and
generating the positioning quality indication information based on the target geographic range and the statistical value.

9. The method according to any one of claims 1 to 8, wherein the positioning quality indication information further indicates a correspondence between the target geographic range and a road, a lane, or a region in the map.

10. The method according to any one of claims 1 to 9, wherein the positioning quality indication information comprises time information, and the time information indicates a valid time of the positioning quality in the target geographic range.

11. The method according to any one of claims 1 to 10, wherein the positioning quality reference information comprises positioning precision of the location point, a precision factor DOP value of the location point, a quantity of satellites observed at the location point, or information indicating whether positioning location information of the location point is a fixed solution.

12. A map using method, wherein the method comprises:
receiving map information, wherein the map information comprises positioning quality indication information and map topology information, the positioning quality indication information indicates a statistical value of positioning quality in a target geographic range, the map topology information indicates a location of a map element in a map, the map element comprises at least one of a region, a road, a lane, an intersection, a toll station, a ramp, a tunnel, and a bridge in the map, and the target geographic range is a region, a road, or a lane in the positioning quality indication information; and
performing path planning, driving decision making, or vehicle control based on the positioning quality indication information and the map topology information.

13. The method according to claim 12, wherein
the target geographic range is a road in the positioning quality indication information, and the road in the positioning quality indication information comprises a plurality of roads in the map, or the road in the map comprises a plurality of roads in the positioning quality indication information; or
the target geographic range is a lane in the positioning quality indication information, and the lane in the positioning quality indication information comprises a plurality of lanes in the map, or the lane in the map comprises a plurality of lanes in the positioning quality indication information.

14. The method according to claim 12, wherein
the target geographic range is a road in the positioning quality indication information, and the road in the positioning quality indication information has a fixed length; or
the target geographic range is a lane in the positioning quality indication information, and the lane in the positioning quality indication information has a fixed length.

15. The method according to claim 12, wherein
the target geographic range is a road in the positioning quality indication information, and an endpoint of the road in the positioning quality indication information is the map element, an endpoint of the map element, or a corner point of the map element; or
the target geographic range is a lane in the positioning quality indication information, and an endpoint of the lane in the positioning quality indication information is the map element, an endpoint of the map element, or a corner point of the map element.

16. The method according to claim 12, wherein
the target geographic range is a road in the positioning quality indication information, the road in the positioning quality indication information comprises a third group of a plurality of location points, and a midpoint of the road in the positioning quality indication information is a location point with worst positioning quality in the third group of the plurality of location points; or
the target geographic range is a lane in the positioning quality indication information, the lane in the positioning quality indication information comprises a fourth group of a plurality of location points, and a midpoint of the lane in the positioning quality indication information is a location point with worst positioning quality in the fourth group of the plurality of location points.

17. The method according to any one of claims 12 to 16, wherein the positioning quality indication information further indicates a correspondence between the target geographic range and a road in the map, or indicates a correspondence between the target geographic range and a lane in the map, or indicates a correspondence between the target geographic range and a region in the map.

18. The method according to any one of claims 12 to 17, wherein the positioning quality indication information comprises time information, and the time information indicates a valid time of the positioning quality in the target geographic range.

19. The method according to any one of claims 12 to 18, wherein the positioning quality indication information comprises average positioning precision of a plurality of location points, an average precision factor DOP value of the plurality of location points, an average quantity of satellites observed at the plurality of location points, or a statistics status indicating whether positioning locations of the plurality of location points are fixed solutions.

20. A map generation apparatus, wherein the apparatus comprises:
an obtaining unit, configured to obtain positioning location information of a first group of a plurality of location points, positioning quality reference information of the first group of the plurality of location points, and location information of a map element in a map;
a generation unit, configured to generate positioning quality indication information based on the positioning location information of the first group of the plurality of location points, the positioning quality reference information of the first group of the plurality of location points, and the location information of the map element in the map, wherein the positioning quality indication information indicates positioning quality in a target geographic range, the first group of the plurality of location points comprise a second group of a plurality of location points in the target geographic range, and the positioning quality in the target geographic range is a statistical value obtained based on positioning quality reference information of the second group of the plurality of location points; and
a processing unit, configured to add the positioning quality indication information to the map.

21. The apparatus according to claim 20, wherein the target geographic range is a region, a road, or a lane in the positioning quality indication information.

22. The apparatus according to claim 21, wherein the map element comprises at least one of a region, a road, a lane, an intersection, a toll station, a ramp, a tunnel, and a bridge in the map.

23. The apparatus according to claim 21 or 22, wherein
the target geographic range is a road in the positioning quality indication information, and the road in the positioning quality indication information comprises a plurality of roads in the map, or the road in the map comprises a plurality of roads in the positioning quality indication information; or
the target geographic range is a lane in the positioning quality indication information, and the lane in the positioning quality indication information comprises a plurality of lanes in the map, or the lane in the map comprises a plurality of lanes in the positioning quality indication information.

24. The apparatus according to claim 21 or 22, wherein
the target geographic range is a road in the positioning quality indication information, and the road in the positioning quality indication information has a fixed length; or
the target geographic range is a lane in the positioning quality indication information, and the lane in the positioning quality indication information has a fixed length.

25. The apparatus according to claim 21 or 22, wherein
the target geographic range is a road in the positioning quality indication information, and an endpoint of the road in the positioning quality indication information is the map element, an endpoint of the map element, or a corner point of the map element; or
the target geographic range is a lane in the positioning quality indication information, and an endpoint of the lane in the positioning quality indication information is the map element, an endpoint of the map element, or a corner point of the map element.

26. The apparatus according to claim 21 or 22, wherein
the target geographic range is a road in the positioning quality indication information, and a midpoint of the road in the positioning quality indication information is a location point with worst positioning quality in the second group of the plurality of location points; or
the target geographic range is a lane in the positioning quality indication information, and a midpoint of the lane in the positioning quality indication information is a location point with worst positioning quality in the second group of the plurality of location points.

27. The apparatus according to any one of claims 21 to 26, wherein the generation unit is specifically configured to:
determine the target geographic range and the second group of the plurality of location points based on the positioning location information of the first group of the plurality of location points and the location information of the map element in the map;
obtain the statistical value based on the positioning quality reference information of the second group of the plurality of location points; and
generate the positioning quality indication information based on the target geographic range and the statistical value.

28. The apparatus according to any one of claims 21 to 27, wherein the positioning quality indication information further indicates a correspondence between the target geographic range and a road, a lane, or a region in the map.

29. The apparatus according to any one of claims 21 to 28, wherein the positioning quality indication information comprises time information, and the time information indicates a valid time of the positioning quality in the target geographic range.

30. The apparatus according to any one of claims 21 to 29, wherein the positioning quality reference information comprises positioning precision of the location point, a precision factor DOP value of the location point, a quantity of satellites observed at the location point, or information indicating whether positioning location information of the location point is a fixed solution.

31. A map using apparatus, wherein the apparatus comprises:
a receiving unit, configured to receive map information, wherein the map information comprises positioning quality indication information and map topology information, the positioning quality indication information indicates a statistical value of positioning quality in a target geographic range, the map topology information indicates a location of a map element in a map, the map element comprises at least one of a region, a road, a lane, an intersection, a toll station, a ramp, a tunnel, and a bridge in the map, and the target geographic range is a region, a road, or a lane in the positioning quality indication information; and
a decision making unit, configured to perform path planning, driving decision making, or vehicle control based on the positioning quality indication information and the map topology information.

32. The apparatus according to claim 31, wherein
the target geographic range is a road in the positioning quality indication information, and the road in the positioning quality indication information comprises a plurality of roads in the map, or the road in the map comprises a plurality of roads in the positioning quality indication information; or
the target geographic range is a lane in the positioning quality indication information, and the lane in the positioning quality indication information comprises a plurality of lanes in the map, or the lane in the map comprises a plurality of lanes in the positioning quality indication information.

33. The apparatus according to claim 31, wherein
the target geographic range is a road in the positioning quality indication information, and the road in the positioning quality indication information has a fixed length; or
the target geographic range is a lane in the positioning quality indication information, and the lane in the positioning quality indication information has a fixed length.

34. The apparatus according to claim 31, wherein
the target geographic range is a road in the positioning quality indication information, and an endpoint of the road in the positioning quality indication information is the map element, an endpoint of the map element, or a corner point of the map element; or
the target geographic range is a lane in the positioning quality indication information, and an endpoint of the lane in the positioning quality indication information is the map element, an endpoint of the map element, or a corner point of the map element.

35. The apparatus according to claim 31, wherein
the target geographic range is a road in the positioning quality indication information, the road in the positioning quality indication information comprises a third group of a plurality of location points, and a midpoint of the road in the positioning quality indication information is a location point with worst positioning quality in the third group of the plurality of location points; or
the target geographic range is a lane in the positioning quality indication information, the lane in the positioning quality indication information comprises a fourth group of a plurality of location points, and a midpoint of the lane in the positioning quality indication information is a location point with worst positioning quality in the fourth group of the plurality of location points.

36. The apparatus according to any one of claims 31 to 35, wherein the positioning quality indication information further indicates a correspondence between the target geographic range and a road in the map, or indicates a correspondence between the target geographic range and a lane in the map, or indicates a correspondence between the target geographic range and a region in the map.

37. The apparatus according to any one of claims 31 to 36, wherein the positioning quality indication information comprises time information, and the time information indicates a valid time of the positioning quality in the target geographic range.

38. The apparatus according to any one of claims 31 to 37, wherein the positioning quality indication information comprises average positioning precision of a plurality of location points, an average precision factor DOP value of the plurality of location points, an average quantity of satellites observed at the plurality of location points, or a statistics status indicating whether positioning locations of the plurality of location points are fixed solutions.

39. A map, wherein the map comprises positioning quality indication information and map topology information, the positioning quality indication information indicates a statistical value of positioning quality in a target geographic range, and the map topology information indicates a location of a map element in the map.

40. The map according to claim 39, wherein the map element comprises at least one of a region, a road, a lane, an intersection, a toll station, a ramp, a tunnel, and a bridge in the map.

41. The map according to claim 39 or 40, wherein the target geographic range is a region, a road, or a lane in the positioning quality indication information.

42. The map according to claim 39 or 40, wherein
the target geographic range is a road in the positioning quality indication information, and the road in the positioning quality indication information comprises a plurality of roads in the map, or the road in the map comprises a plurality of roads in the positioning quality indication information; or
the target geographic range is a lane in the positioning quality indication information, and the lane in the positioning quality indication information comprises a plurality of lanes in the map, or the lane in the map comprises a plurality of lanes in the positioning quality indication information.

43. The map according to claim 39 or 40, wherein
the target geographic range is a road in the positioning quality indication information, and the road in the positioning quality indication information has a fixed length; or
the target geographic range is a lane in the positioning quality indication information, and the lane in the positioning quality indication information has a fixed length.

44. The map according to claim 39 or 40, wherein the target geographic range is a road in the positioning quality indication information, and an endpoint of the road in the positioning quality indication information is the map element, an endpoint of the map element, or a corner point of the map element; and
the target geographic range is a lane in the positioning quality indication information, and an endpoint of the lane in the positioning quality indication information is the map element, an endpoint of the map element, or a corner point of the map element.

45. The map according to claim 39 or 40, wherein
the target geographic range is a road in the positioning quality indication information, the road in the positioning quality indication information comprises a third group of a plurality of location points, and a midpoint of the road in the positioning quality indication information is a location point with worst positioning quality in the third group of the plurality of location points; or
the target geographic range is a lane in the positioning quality indication information, the lane in the positioning quality indication information comprises a fourth group of a plurality of location points, and a midpoint of the lane in the positioning quality indication information is a location point with worst positioning quality in the fourth group of the plurality of location points.

46. The map according to any one of claims 39 to 45, wherein the positioning quality indication information further indicates a correspondence between the target geographic range and a road in the map, or indicates a correspondence between the target geographic range and a lane in the map, or indicates a correspondence between the target geographic range and a region in the map.

47. The map according to any one of claims 39 to 46, wherein the positioning quality indication information comprises time information, and the time information indicates a valid time of the positioning quality in the target geographic range.

48. A map generation apparatus, wherein the apparatus comprises a memory and a processor, the memory stores computer program instructions, and the processor runs the computer program instructions, so that the apparatus performs the method according to any one of claims 1 to 11.

49. A map using apparatus, wherein the apparatus comprises a memory and a processor, the memory stores computer program instructions, and the processor runs the computer program instructions, so that the apparatus performs the method according to any one of claims 12 to 19.

50. A vehicle, wherein the vehicle comprises the map using apparatus according to any one of claims 31 to 38 or claim 49.

51. A computer-readable storage medium, comprising computer instructions, wherein when the computer instructions are run by a processor, the method according to any one of claims 1 to 11 is implemented.

52. A computer-readable storage medium, comprising computer instructions, wherein when the computer instructions are run by a processor, the method according to any one of claims 12 to 19 is implemented.

53. A computer-readable storage medium, wherein the computer-readable storage medium stores the map according to claim 39.

54. A computer program product, comprising computer instructions, wherein when the computer instructions are run by a processor, the method according to any one of claims 1 to 11 is implemented.

55. A computer program product, comprising computer instructions, wherein when the computer instructions are run by a processor, the method according to any one of claims 12 to 19 is implemented.
